(19) Europäisches Patentamt
European Patent Office
Office européen des brevets

(11) **EP 4 703 367 A1**

(12) **EUROPEAN PATENT APPLICATION**
published in accordance with Art. 153(4) EPC

(43) Date of publication:
04.03.2026 Bulletin 2026/10

(21) Application number: 24796951.2

(22) Date of filing: 19.04.2024

(51) International Patent Classification (IPC):
*C07F 15/00* (2006.01)    *B01J 31/22* (2006.01)
*C08G 65/336* (2006.01)    *C08L 71/00* (2006.01)
*C08L 101/10* (2006.01)

(52) Cooperative Patent Classification (CPC):
B01J 31/22; C07F 15/00; C08G 65/336;
C08L 71/00; C08L 101/10

(86) International application number:
PCT/JP2024/015650

(87) International publication number:
WO 2024/225204 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.04.2023 JP 2023070768
01.09.2023 JP 2023142465

(71) Applicant: Kaneka Corporation
Osaka-shi, Osaka 530-8288 (JP)

(72) Inventor: ONISHI, Yoshinobu
Hyogo 676-8688 (JP)

(74) Representative: Vossius & Partner
Patentanwälte Rechtsanwälte mbB
Siebertstraße 3
81675 München (DE)

(54) **RUTHENIUM COMPLEX, METHOD FOR PRODUCING SILYL GROUP-CONTAINING COMPOUND, SILYL GROUP-CONTAINING POLYMER MIXTURE, CURABLE COMPOSITION, AND CURED PRODUCT**

(57)    A ruthenium complex (A) having a compound (B) is used as a hydrosilylation catalyst. Alternatively, the compound (B) and a ruthenium compound (A') that does not have the compound (B) as a ligand are mixed to form a hydrosilylation catalyst. The compound (B) contains at least one carbon-carbon double bond per molecule, and contains an electron-withdrawing group bonded to at least one of carbon atoms forming the carbon-carbon double bond.

EP 4 703 367 A1

## Description

## Technical Field

The present invention relates to a ruthenium complex, a method for producing a silyl group-containing compound, a silyl group-containing polymer mixture, a curable composition, and a cured product.

## Background Art

An organic polymer having a silicon atom, in particular an organic polymer that has a silyl group having a hydroxy or hydrolyzable group on a silicon atom and capable of forming a siloxane bond (this silyl group will be hereinafter referred to as a "hydrolyzable silyl group"), is known as a moisture-reactive polymer. Such polymers cure via hydrolysis to form flexible, rubber-like cured products and are therefore used in a wide range of industrial products such as sealing materials, adhesives, coating materials, paints, and pressure-sensitive adhesives.

A generally known method for obtaining a silyl group-containing organic polymer is to carry out hydrosilylation of an allyl group-containing organic polymer with a hydrosilane compound in the presence of a metal catalyst. However, it is known that side reactions occur during the hydrosilylation, such as isomerization of the allyl groups into 1-propenyl groups (internal olefins) and hydrogenation of the allyl groups. This issue is common to all cases of hydrosilylation of allyl group-containing compounds in the presence of a metal catalyst. When a Karstedt catalyst (a platinum-divinyldisiloxane complex), which is a widely used catalyst, is employed in hydrosilylation of an allyl group-containing organic polymer, the above side reactions occur to an extent of approximately 20%, thereby limiting the degree of silyl group introduction. Consequently, a rubber-like cured product obtained by curing a curable composition containing the resulting hydrolyzable silyl group-containing organic polymer has room for improvement in properties such as modulus and tensile strength.

In addition to platinum catalysts such as Karstedt catalysts, metal catalysts with good hydrosilylation activity are known. Ruthenium catalysts are one example of such metal catalysts. Patent Literature 1 reports that reacting an allyl ether compound with a hydrosilane compound in the presence of a specific ruthenium complex enables efficient production of the corresponding silylated derivative. However, when the allyl ether compound has a high molecular weight, the extent of side reactions increases, and the selectivity for production of the silylated derivative decreases. Accordingly, the reported method is limited to producing silylated derivatives with molecular weights up to 3,000.

## Citation List

### Patent Literature

PTL 1: Japanese Laid-Open Patent Application Publication No. 2021-11456

## Summary of Invention

### Technical Problem

The present invention aims to provide a ruthenium complex and a silyl group-containing compound production method that allow for efficient introduction of silyl groups in hydrosilylation of an allyl group-containing compound, regardless of the molecular weight of the allyl group-containing compound.

### Solution to Problem

As a result of intensive studies, the present inventors have found that hydrosilylation of an allyl group-containing compound in the presence of a ruthenium catalyst having a specific compound as a ligand affords efficient production of a silylated derivative, regardless of the molecular weight of the allyl group-containing compound. The inventors have further found that adding a specific compound before carrying out hydrosilylation of an allyl group-containing compound using a known ruthenium catalyst also makes it possible to efficiently produce a silylated derivative, regardless of the molecular weight of the allyl group-containing compound. Based on these findings, the inventors have arrived at the present invention.

Specifically, the present invention relates to a ruthenium complex (A) having a compound (B) as a ligand, wherein the compound (B) contains at least one carbon-carbon double bond per molecule, and contains an electron-withdrawing group bonded to at least one of carbon atoms forming the carbon-carbon double bond.

The present invention also relates to a hydrosilylation catalyst containing the ruthenium complex (A).

The present invention further relates to a method for producing a silyl group-containing compound (E), the method including the step of carrying out hydrosilylation of an allyl group-containing compound (C) with a hydrosilane compound (D) by mixing the allyl group-containing compound (C), the hydrosilane compound (D), and the hydrosilylation catalyst.

The present invention further relates to a method for producing a silyl group-containing compound (E), the method including the step of carrying out hydrosilylation of an allyl group-containing compound (C) with a hydrosilane compound (D) by mixing the allyl group-containing compound (C), the hydrosilane compound (D), a compound (B), and a ruthenium compound (A') that does not have the compound (B) as a ligand, wherein the compound (B) contains at least one carbon-carbon double bond per molecule, and contains an electron-withdrawing group bonded to at least one of carbon atoms forming the carbon-carbon double bond.

The present invention also relates to: a polymer mixture containing a hydrolyzable silyl group-containing polymer and the ruthenium complex (A); a curable composition containing the polymer mixture and a curing catalyst; and a cured product obtained by curing the curable composition.

**Advantageous Effects of Invention**

The present invention can provide: a ruthenium complex that enables efficient introduction of silyl groups when used as a catalyst in hydrosilylation of an allyl group-containing compound with a hydrosilane compound, regardless of the molecular weight of the allyl group-containing compound; and a hydrosilylation catalyst containing the ruthenium complex. The present invention can also provide a method for producing a silyl group-containing compound, the method being adapted for efficient introduction of silyl groups in hydrosilylation of an allyl group-containing compound with a hydrosilane compound. The present invention can further provide: a hydrolyzable silyl group-containing polymer mixture, obtained by the production method of the present invention, in which silyl groups have been efficiently introduced; and a curable composition containing the polymer mixture. The present invention can further provide a cured product obtained by curing the curable composition.

**Description of Embodiments**

Hereinafter, an embodiment of the present invention will be described in detail.

A ruthenium complex (A) according to one embodiment of the present invention is characterized in that it has a compound (B) as a ligand, and the compound (B) has at least one carbon-carbon double bond per molecule and contains an electron-withdrawing group bonded to at least one of the carbon atoms forming the carbon-carbon double bond. Compared to known ruthenium catalysts, such a ruthenium complex (A) exhibits higher selectivity when used as a catalyst in hydrosilylation of an allyl group-containing compound with a hydrosilane compound. Accordingly, the use of the ruthenium complex (A) can reduce the formation of 1-propenyl groups and hydrogenated groups (propyl groups) via side reactions, thereby enabling efficient production of the corresponding silylated derivative even when the silylated derivative is a high-molecular-weight polymer having a number-average molecular weight of more than 3,000. Hereinafter, the "ruthenium complex (A)" and the "compound (B)" will be described in detail.

<Ruthenium Complex (A)>

The ruthenium complex (A) according to one embodiment of the present invention is a ruthenium complex having the compound (B) as a ligand. The ruthenium complex (A) is not limited to a particular type and may be any ruthenium complex having the compound (B) as a ligand. The compound (B) that the ruthenium complex (A) has as a ligand may consist of a single type of compound or may be a combination of two or more different compounds.

(Method for Producing Ruthenium Complex (A))

The ruthenium complex (A) can be produced in accordance with a known production method. Examples of starting materials for the production of the ruthenium complex (A) include anhydrides and hydrates of compounds selected from ruthenium(III) chloride, ruthenium(III) bromide, and ruthenium(III) iodide. A specific exemplary method for producing the ruthenium complex (A) is to add the compound (B) to an ethanol solution of ruthenium(III) chloride hydrate, heat the resulting solution under reflux, and then perform filtration followed by drying. In the case of using ruthenium(III) chloride hydrate as a starting material, the heating under reflux may be performed in the presence of a base compound such as sodium carbonate or sodium hydrogen carbonate to neutralize hydrogen chloride generated during the heating under reflux. When ruthenium(III) chloride hydrate is reacted with the compound (B), it is preferable, in terms of the extent of reaction, to use 1 molar equivalent or more of the compound (B) per molar equivalent of the ruthenium compound serving as a starting material.

The ruthenium complex (A) may have a compound (B') as a ligand in addition to the compound (B). The compound (B') is a compound that can coordinate with the ruthenium complex (A) and is not classified as a compound (B). Examples of the compound (B') that can serve as a ligand include, but are not limited to, 2,5-norbornadiene, 1,5-cyclooctadiene, p-cymene, mesitylene, benzene, carbonyl, isocyanide, and arene ligands.

When the ruthenium complex (A) has both the compound (B) and the compound (B') as ligands, the proportion of the compound (B) in the total ligands of the ruthenium complex (A) is preferably as high as possible in order for the ruthenium complex (A) to exhibit good selectivity. The proportion of the compound (B) in the total ligands is preferably from 1 to 100 mol%, more preferably from 50 to 100 mol%, even more preferably from 70 to 100 mol%, and still more preferably from 90 to 100 mol%.

The ruthenium complex (A) having the compound (B) as a ligand can be obtained by the method described below, in which the compound (B) is added to a system containing a ruthenium compound (A') that does not have the compound (B) as a ligand, thereby converting the ruthenium compound (A') into the ruthenium complex (A).

<Compound (B)>

The compound (B) according to one embodiment of the present invention is a compound capable of coordinating with ruthenium complexes. The compound (B) has at least one carbon-carbon double bond per molecule and contains an electron-withdrawing group bonded to at least one of the carbon atoms forming the carbon-carbon double bond.

The compound (B) has a basic skeleton containing the carbon-carbon double bond, and examples of the basic skeleton include norbornadiene, cyclooctadiene, benzene ring, and benzoquinone skeletons. Specific examples include 2,5-norbornadiene, 1,5-cyclooctadiene, p-cymene, mesitylene, benzene ring, and benzoquinone skeletons. The basic skeleton is preferably a norbornadiene or benzene ring skeleton.

Examples of the electron-withdrawing group include: halogen groups such as fluoro, chloro, bromo, and iodo groups; and cyano, aldehyde, and nitro groups. When the compound (B) contains a plurality of electron-withdrawing groups in the same molecule, the groups may be of different types.

The compound (B) may contain at least one electron-withdrawing group per molecule, but preferably contains two or more, more preferably two to four, particularly preferably two or three electron-withdrawing groups per molecule.

Preferred electron-withdrawing groups are halogen groups. Fluoro, bromo, and iodo groups are more preferred, with bromo and iodo groups being even more preferred. Particularly preferred is a bromo group. In particular, the compound (B) preferably contains at least one, more preferably two or more, electron-withdrawing groups selected from fluoro, bromo, and iodo groups per molecule. Even more preferably, the compound (B) contains at least one electron-withdrawing group selected from bromo and iodo groups per molecule. In this case, the compound (B) may further contain a fluoro group in addition to the bromo and/or iodo groups.

These electron-withdrawing groups are preferably bonded directly to the carbon atoms forming the carbon-carbon double bonds of the compound (B). In particular, when the compound (B) has a benzene ring skeleton, the electron-withdrawing groups are preferably bonded directly to the benzene ring.

The structure of the compound (B) is composed of a combination of the basic skeleton and the electron-withdrawing groups. The compound (B) is not limited to a particular type. Examples of the compound (B) include: 2-bromonorbornadiene; 2,3-dibromonorbornadiene; 1,4-dibromobenzene and structural isomers thereof; 1-bromo-4-iodobenzene and structural isomers thereof; 1,3,5-tribromobenzene and structural isomers thereof; 1,2,4,5-tetrabromobenzene and structural isomers thereof; hexabromobenzene; 1-bromo-3,5-difluorobenzene and structural isomers thereof; 1-bromo-3,5-dichlorobenzene and structural isomers thereof; 1-bromo-3,5-diiodobenzene and structural isomers thereof; 1-bromo-3-chloro-5-fluorobenzene and structural isomers thereof; 1,4-diiodobenzene and structural isomers thereof; 1,3,5-triiodobenzene and structural isomers thereof; 1,2,4,5-tetraiodobenzene and structural isomers thereof; hexaiodobenzene; 1,3-difluoro-5-iodobenzene and structural isomers thereof; 1,3-dichloro-5-iodobenzene and structural isomers thereof; 1,3-dibromo-5-iodobenzene and structural isomers thereof; 1,3-dibromo-5-chlorobenzene and structural isomers thereof; 1-chloro-3,5-diiodobenzene and structural isomers thereof; 1-fluoro-3,5-dibromobenzene and structural isomers thereof; 1-fluoro-3,5-diiodobenzene and structural isomers thereof; 1-chloro-3-fluoro-5-iodobenzene and structural isomers thereof; 1-bromo-3-chloro-5-iodobenzene and structural isomers thereof; and 1-bromo-3-fluoro-5-iodobenzene and structural isomers thereof. In particular, in order to reduce the formation of by-products, the compound (B) is preferably 2,3-dibromonorbornadiene, 1,4-dibromobenzene, 1-bromo-3,5-difluorobenzene, 1-bromo-2,6-difluorobenzene, 1,3,5-tribromobenzene, 1,4-diiodobenzene, or hexabromobenzene and particularly preferably 2,3-dibromonorbornadiene, 1,4-dibromobenzene, 1-bromo-3,5-difluorobenzene, 1-bromo-2,6-difluorobenzene, 1,4-diiodobenzene, or 1,3,5-tribromobenzene. One compound (B) may be used alone, or two or more different compounds (B) may be used in combination.

A method for producing a silyl group-containing compound (E) according to one embodiment of the present invention includes the step of carrying out hydrosilylation of an allyl group-containing compound (C) with a hydrosilane compound (D) in the presence of a ruthenium complex (A) serving as a hydrosilylation catalyst. The ruthenium complex (A) is as described above. Hereinafter, the "silyl group-containing compound (E)", the "allyl group-containing compound (C)",

the "hydrosilane compound (D)", and the "reaction conditions" will be described in detail.

<Silyl Group-Containing Compound (E)>

The silyl group-containing compound (E) according to the present embodiment may be any compound containing a silicon atom derived from the hydrosilane compound (D) and a propylene group derived from the allyl group-containing compound (C) and bonded to the silicon atom, and is not limited to having a particular structure. The silyl group-containing compound (E) has a silyl group represented by the following formula (1).

$$-SiR_aX_b \qquad \text{formula (1)}$$

In the formula (1), R is a substituted or unsubstituted monovalent hydrocarbon group having 1 to 20 carbon atoms. When there are a plurality of R groups in the formula (1), they may be the same or different. The hydrocarbon group may be saturated or unsaturated, and may be aliphatic, alicyclic, or aromatic. The number of carbon atoms in the hydrocarbon group is preferably from 1 to 10, more preferably from 1 to 8, even more preferably from 1 to 6, still more preferably from 1 to 3, and particularly preferably 1 or 2. When the hydrocarbon group contains a substituent, examples of the substituent include, but are not limited to, halogen groups such as a chloro group, alkoxy groups such as a methoxy group, and amino groups such as an N,N-diethylamino group.

Examples of R include: unsubstituted alkyl groups such as methyl, ethyl, n-propyl, isopropyl, n-butyl, *tert-butyl,* n-hexyl, 2-ethylhexyl, and n-dodecyl groups; substituted alkyl groups such as chloromethyl, methoxymethyl, and N,N-diethylaminomethyl groups; unsaturated hydrocarbon groups such as vinyl, isopropenyl, and allyl groups; cycloalkyl groups such as a cyclohexyl group; aryl groups such as phenyl, toluyl, and 1-naphthyl groups; and aralkyl groups such as a benzyl group. R is preferably a substituted or unsubstituted alkyl group, more preferably a methyl, ethyl, chloromethyl, or methoxymethyl group, even more preferably a methyl or methoxymethyl group, and particularly preferably a methyl group. When a plurality of R groups are present, they may be the same or different.

In the formula (1), X is a hydroxy or hydrolyzable group. When there are a plurality of X groups in the formula (1), they may be the same or different. The hydrolyzable group is not limited to a particular type and may be a known hydrolyzable group. Examples include: a hydrogen atom; halogen atoms; and alkoxy, acyloxy, ketoximate, amino, amide, acid amide, aminooxy, mercapto, and alkenyloxy groups. Among these, alkoxy, acyloxy, ketoximate, and alkenyloxy groups are preferred. Alkoxy groups are more preferred in terms of moderate hydrolyzability and ease of handling. Methoxy and ethoxy groups are even more preferred, and particularly preferred is a methoxy group. When a plurality of X groups are present, they may be the same or different.

In the formula (1), a is 0, 1, 2, or 3, and b is 0, 1, 2, or 3. The sum a + b is 3 or less and preferably 3. When the silyl group is a hydrolyzable silyl group, b is 1, 2, or 3. In terms of curability, b is preferably 2 or 3.

The molecular weight of the silyl group-containing compound (E) is not limited to a particular range. The silyl group-containing compound (E) may be a low-molecular-weight compound or a polymer. A production method according to known art (Patent Literature 1) allows for the production of a low-molecular-weight silyl group-containing compound with a small amount of by-products. However, when this method is applied to the production of a silyl group-containing compound having a high molecular weight, the selectivity for the desired silylated derivative decreases. For example, in Experimental Examples 2 to 10, in which silyl group-containing organic polymers having a molecular weight of about 1,400 were produced, the proportion of isomerized groups (1-propenyl groups) formed as by-products was 8%, and the yield of the silylated derivative was at most 92%. In contrast, the method of the present invention exhibits high selectivity even when a silyl group-containing organic polymer having a number-average molecular weight of more than 3,000, 10,000, or 20,000 is produced using the allyl group-containing compound (C) having a high molecular weight, thereby enabling the production of a silylated derivative with a low proportion of by-products (1-propenyl groups or hydrogenated groups). Thus, the catalyst and production method of the present invention are suitable for producing the silyl group-containing compound (E), particularly a silyl group-containing organic polymer ($E_a$). In particular, when the silyl group-containing organic polymer ($E_a$) is a hydrolyzable silyl group-containing organic polymer, the polymer ($E_a$) is industrially useful as it can be used as a curable resin for adhesives, sealing materials, elastic coating materials, or pressure-sensitive adhesives. A curable composition containing the hydrolyzable silyl group-containing organic polymer according to the present invention exhibits excellent curability, and a rubber-like cured product obtained by curing the composition can exhibit high modulus, high tensile strength, and other desired properties.

(Polymer Backbone of Silyl Group-Containing Organic Polymer ($E_a$))

The silyl group-containing organic polymer ($E_a$) according to the present embodiment has a polymer backbone (also referred to as a "main chain structure") and polymer chain ends bonded to the polymer backbone. The polymer backbone is a structure composed of a sequence of monomer units derived from monomers bonded to one another through an addition or condensation reaction. The polymer backbone may consist of monomer units of the same type or may include different types of monomer units bonded together.

The polymer chain ends are sites located at the termini of the polymer backbone. The number of polymer chain ends of the silyl group-containing organic polymer ($E_a$) is two when the entire polymer backbone is linear and three or more when the entire polymer backbone is branched. When the polymer backbone is a mixture of linear and branched backbones, the number of polymer chain ends can be, on average, between two and three.

The silyl group of the silyl group-containing organic polymer ($E_a$) can be located in the polymer backbone and/or at the polymer chain ends. Two or more silyl groups may be present at a single polymer chain end. When the silyl group of the silyl group-containing organic polymer ($E_a$) is a hydrolyzable silyl group, the polymer ($E_a$) can be used as a curable resin for adhesives, sealing materials, elastic coating materials, or pressure-sensitive adhesives, and the hydrolyzable silyl group is preferably located at the polymer chain ends of the silyl group-containing organic polymer ($E_a$). The descriptions given below regarding the curable resin, the curable composition, and the cured product assume that the silyl group of the silyl group-containing organic polymer ($E_a$) is a hydrolyzable silyl group.

The polymer backbone (also referred to as the main chain structure) of the silyl group-containing organic polymer ($E_a$) is not limited to a particular type, and various main chain structures can be used. Specific examples of the main chain structure include: polyoxyalkylene polymers such as polyoxyethylene, polyoxypropylene, polyoxybutylene, polyoxytetramethylene, polyoxyethylene-polyoxypropylene copolymer, and polyoxypropylene-polyoxybutylene copolymer; hydrocarbon polymers such as ethylene-propylene copolymer, polyisobutylene, copolymer of isobutylene and isoprene, and hydrogenated polyolefin polymers obtained by hydrogenation of the mentioned polyolefin polymers; polyester polymers obtained by condensation of a dibasic acid such as adipic acid and a glycol or ring-opening polymerization of a lactone; (meth)acrylic ester polymers obtained by radical polymerization of a (meth)acrylic ester monomer such as methyl (meth)acrylate, ethyl (meth)acrylate, butyl (meth)acrylate, 2-ethylhexyl (meth)acrylate, or stearyl (meth)acrylate; vinyl copolymers obtained by radical polymerization of a monomer such as a (meth)acrylic ester monomer, vinyl acetate, acrylonitrile, or styrene; polysulfide polymers; polyamide polymers; polycarbonate polymers; and diallyl phthalate polymers. The term "(meth)acryl" as used above means "acryl and/or methacryl".

Among the polymers listed above, saturated hydrocarbon polymers such as polyisobutylene, hydrogenated polyisoprene, and hydrogenated polybutadiene, polyoxyalkylene polymers, and (meth)acrylic ester polymers are preferred, as they have relatively low glass transition temperatures and their use can yield a cured product with high cold resistance. One of these polymers may be used alone, or two or more thereof may be used in combination.

When the silyl group-containing organic polymer ($E_a$) is a hydrolyzable silyl group-containing organic polymer, polyoxyalkylene polymers and (meth)acrylic ester polymers are particularly preferred, as they have high moisture permeability and their use enables a one-part curable composition containing the polymer ($E_a$) to exhibit high depth curability and strong adhesion. Polyoxyalkylene polymers are more preferred, with polyoxypropylene being even more preferred.

A polyoxyalkylene polymer is preferred which has a repeating unit represented by -R-O- wherein R is a linear or branched alkylene group having 1 to 14 carbon atoms. R is more preferably a linear or branched alkylene group having 2 to 4 carbon atoms. Specific examples of the repeating unit represented by -R-O- include -CH$_2$O-, -CH$_2$CH$_2$O-, -CH$_2$CH(CH$_3$)O-, -CH$_2$CH(C$_2$H$_5$)O-, -CH$_2$C(CH$_3$)(CH$_3$)O-, and -CH$_2$CH$_2$CH$_2$CH$_2$O-. The main chain structure of the polyoxyalkylene polymer may consist solely of repeating units of the same type or may include two or more different types of repeating units.

In particular, when the silyl group-containing organic polymer ($E_a$) according to the present embodiment is a hydrolyzable silyl group-containing organic polymer used as a curable resin for sealants, adhesives, or the like, a polyoxypropylene polymer in which oxypropylene repeating units constitute 50 wt% or more, more preferably 80 wt% or more, of the polymer backbone is preferred. This is because such a polyoxypropylene polymer is amorphous and exhibits relatively low viscosity.

The main chain structure of the polyoxyalkylene polymer may be linear or branched. When the main chain structure is branched, the number of branches is preferably from 1 to 6 (this means that the number of terminal groups is from 3 to 8), more preferably from 1 to 4 (this means that the number of terminal groups is from 3 to 6), and most preferably 1 (this means that the number of terminal groups is 3). Having a branched main chain structure, the polyoxyalkylene polymer can provide an enhancing effect on the recovery performance of the cured product. In addition, the polyoxyalkylene polymer can be expected to have a reducing effect on the water absorbency of the cured product.

The polyoxyalkylene polymer is preferably a polymer obtained by subjecting a cyclic ether compound to ring-opening polymerization using a polymerization catalyst in the presence of an initiator.

Examples of the cyclic ether compound include ethylene oxide, propylene oxide, butylene oxide, tetramethylene oxide, and tetrahydrofuran. One of these cyclic ether compounds may be used alone, or two or more thereof may be used in combination. Among these cyclic ether compounds, propylene oxide is particularly preferred for use to obtain an amorphous polyether polymer with relatively low viscosity.

Specific examples of the initiator include: alcohols such as butanol, ethylene glycol, propylene glycol, propylene glycol monoalkyl ether, butanediol, hexamethylene glycol, neopentyl glycol, diethylene glycol, dipropylene glycol, triethylene glycol, glycerin, trimethylolmethane, trimethylolpropane, pentaerythritol, and sorbitol; and hydroxy-terminated polyoxyalkylene polymers such as polyoxypropylene diol, polyoxypropylene triol, polyoxyethylene diol, and polyoxyethylene triol which have a number-average molecular weight of 300 to 4,000.

Examples of methods for polyoxyalkylene polymer synthesis include, but are not limited to: a polymerization method using an alkali catalyst such as KOH; a polymerization method taught in Japanese Laid-Open Patent Application Publication No. S61-215623, which uses a transition metal compound-porphyrin complex catalyst such as a complex obtained by a reaction of an organoaluminum compound and porphyrin; a polymerization method taught in Japanese Examined Patent Application Publication No. S46-27250, Japanese Examined Patent Application Publication No. S59-15336, U.S. Patent No. 3278457, U.S. Patent No. 3278458, U.S. Patent No. 3278459, U.S. Patent No. 3427256, U.S. Patent No. 3427334, or U.S. Patent No. 3427335, which uses a double metal cyanide complex catalyst; a polymerization method illustrated in Japanese Laid-Open Patent Application Publication No. H10-273512, which uses a catalyst made of a polyphosphazene salt; and a polymerization method illustrated in Japanese Laid-Open Patent Application Publication No. H11-060722, which uses a catalyst made of a phosphazene compound. The polymerization method using a double metal cyanide complex catalyst is more preferred, for example, in terms of production cost or for obtaining a polymer with a narrow molecular weight distribution.

The silyl group-containing organic polymer ($E_a$) may be a polyoxyalkylene polymer whose polymer backbone contains other bonds such as urethane bonds or urea bonds.

The silyl group-containing organic polymer ($E_a$) is not limited to having a particular molecular weight distribution (Mw/Mn), but the dispersity is preferably 1.6 or less, more preferably 1.4 or less, even more preferably 1.3 or less, and particularly preferably 1.2 or less. When the dispersity is in this range, the silyl group-containing organic polymer ($E_a$) exhibits relatively low viscosity and is easy to handle. The molecular weight distribution of the silyl group-containing organic polymer ($E_a$) can be determined from the number-average and weight-average molecular weights obtained through GPC analysis.

The number-average molecular weight of the silyl group-containing organic polymer ($E_a$), expressed as a polystyrene-equivalent molecular weight determined by GPC analysis, is preferably more than 3,000, more preferably more than 10,000, and even more preferably more than 20,000. When the number-average molecular weight is high, the cured product of the silyl group-containing organic polymer ($E_a$) exhibits high elongation and excellent mechanical properties. The number-average molecular weight is preferably from 8,000 to 100,000, more preferably from 8,000 to 50,000, and particularly preferably from 8,000 to 35,000. When the number-average molecular weight is in these ranges, the cured product has excellent mechanical properties, and the the silyl group-containing organic polymer ($E_a$) has good curability. In addition, the silyl group-containing organic polymer ($E_a$) can exhibit a viscosity suitable for handling and offer excellent workability.

The molecular weight of the silyl group-containing organic polymer ($E_a$) can be expressed also as a terminal group-equivalent molecular weight, which is determined by directly measuring the terminal group concentration through titration analysis based on the principles of the hydroxy value measurement method as specified in JIS K 1557-1 and the iodine value measurement method as specified in JIS K 0070 and by calculating with consideration of the architecture of the organic polymer (the degree of branching which depends on the polymerization initiator used). The terminal group-equivalent molecular weight of the silyl group-containing organic polymer ($E_a$) can be determined also by creating a calibration curve representing the relationship between the number-average molecular weight of the polymer precursor as determined by standard GPC analysis and the terminal group-equivalent molecular weight, determining the number-average molecular weight of the silyl group-containing organic polymer ($E_a$) by GPC analysis, and converting the determined number-average molecular weight into the terminal group-equivalent molecular weight based on the calibration curve.

<Allyl Group-Containing Compound (C)>

The allyl group-containing compound (C) according to the present embodiment is not limited to a particular type and may be any compound having an allyl group ($CH_2$=CH-$CH_2$-) and capable of hydrosilylation with the hydrosilane compound (D) to form the silyl group-containing compound (E). Like the silyl group-containing organic polymer ($E_a$), the allyl group-containing compound (C) may be an allyl group-containing organic polymer. The polymer backbone of the allyl group-containing organic polymer may be the same as the polymer backbone of the silyl group-containing organic polymer ($E_a$) and will therefore not be described below.

<Hydrosilane Compound (D)>

The hydrosilane compound (D) according to the present embodiment is not limited to a particular structure but preferably has a structure represented by the following formula (2).

$$SiR_aX_bH_{4-a-b} \qquad \text{formula (2)}$$

In the formula (2), R, X, a, and b are as defined above for the formula (1).

Specific examples of such a hydrosilane compound (D) include trimethoxysilane, triethoxysilane, triphenoxysilane, tris(2-propenyloxy)silane, triacetoxysilane, dimethoxymethylsilane, diethoxymethylsilane, dimethoxyethylsilane, (chloromethyl)dimethoxysilane, (chloromethyl)diethoxysilane, (methoxymethyl)dimethoxysilane, (methoxymethyl) diethoxysilane, (*N,N*-diethylaminomethyl)dimethoxysilane, (*N,N*-diethylaminomethyl)diethoxysilane, diphenoxymethylsilane, methylsilane, dimethylsilane, trimethylsilane, ethylsilane, diethylsilane, triethylsilane, methyldiethylsilane, dimethylethylsilane, chlorodimethylsilane, dichloromethylsilane, phenylsilane, diphenylsilane, triphenylsilane, phenylmethylsilane, phenyldimethylsilane, diphenylmethylsilane, ethylphenylsilane, diethylphenylsilane, and ethyldiphenylsilane.

When a hydrolyzable silyl group-containing organic polymer suitable for adhesives or sealing materials is to be obtained as the silyl group-containing organic polymer ($E_a$), the hydrosilane compound (D) is particularly preferably trimethoxysilane or dimethoxymethylsilane in terms of curability and physical properties achieved after curing.

<Reaction Conditions>

The amount of the hydrosilane compound (D) used in the reaction step (i.e., the initially added amount), expressed as a molar amount relative to the allyl groups of the allyl group-containing compound (C), is preferably 1 molar equivalent or more, more preferably 3 molar equivalents or more, and even more preferably 5 molar equivalents or more. The molar amount is typically 20 molar equivalents or less and preferably 10 molar equivalents or less. When the amount of the hydrosilane compound (D) is in the above range, silyl groups can be efficiently introduced while reducing production cost. In addition, when the amount of the hydrosilane compound (D) is in the above range, the viscosity of the silyl group-containing organic polymer ($E_a$) produced can be kept low, and the polymer can exhibit good workability.

The amount of the ruthenium complex (A) used in the reaction step (i.e., the initially added amount), expressed as a proportion by weight relative to the allyl group-containing compound (C), is typically 0.01 ppm or more, preferably 0.1 ppm or more, and more preferably 1 ppm or more, and is typically 10% or less, preferably 1% or less, and more preferably 0.1% or less. When the amount of the ruthenium complex (A) is in this range, silyl groups can be introduced efficiently.

The reaction step may be carried out either using a solvent or without using any solvent. When a solvent is used, the solvent is not limited to a particular type. The solvent is preferably a compound with which the starting material or catalyst does not react. Specific examples include hydrocarbon solvents such as hexane and halogen solvents such as dichloromethane. The solvent is preferably dehydrated and deoxygenated before use.

The reaction temperature in the reaction step can be chosen as appropriate in consideration of factors such as the reactivity (reaction rate) and the upper temperature limit of the reaction vessel. The reaction temperature is typically 0°C or higher, preferably 20°C or higher, and more preferably 40°C or higher, and is typically 200°C or lower and preferably 150°C or lower. The higher the reaction temperature, the shorter the time required for completion of the reaction can be, and the more reliably side reactions can be suppressed. The reaction time is not limited to a particular range and may be from about 5 minutes to about 12 hours or may be from about 10 minutes to about 5 hours.

The reaction step is preferably performed under an atmosphere of an inert gas such as nitrogen or argon.

In the hydrosilylation, it is preferable to add and mix the compound (B) into the reaction system along with the addition of the ruthenium complex (A), as this can increase the extent of silylation. A possible reason for the increase in the extent of silylation may be that the added compound (B) reacts with ruthenium(III) chloride remaining in the ruthenium complex (A) due to an insufficient amount of the compound (B) used in the synthesis of the ruthenium complex (A), and this reaction converts the ruthenium(III) chloride into the ruthenium complex (A). Thus, it is preferable to bring the ruthenium complex (A) and the compound (B) into contact before the onset of the hydrosilylation. For example, in a preferred embodiment, the allyl group-containing compound (C) introduced into the reaction vessel is stirred at a given temperature, the ruthenium complex (A) and the compound (B) are added and mixed with the allyl group-containing compound (C) under stirring, and the hydrosilane compound (D) is then added. The interval between the addition of the ruthenium complex (A) and the compound (B) and the addition of the hydrosilane compound (D) is not limited to a particular length of time and may be chosen as appropriate in consideration of factors such as the intended degree of silyl group introduction and the time required for production.

A method for producing the silyl group-containing compound (E) according to one embodiment of the present invention includes the step of carrying out hydrosilylation of the allyl group-containing compound (C) with the hydrosilane compound (D) by mixing the group-containing compound (C), the hydrosilane compound (D), a ruthenium compound (A') that does not have the compound (B) as a ligand, and the compound (B). This production method eliminates the need to synthesize the ruthenium complex (A) in advance as in the production method previously described. The ruthenium complex (A) is generated in the reaction system by mixing the ruthenium compound (A') and the compound (B) in the reaction vessel, and this complex functions as a catalyst. As a result, the silylated derivative can be produced efficiently.

The allyl group-containing compound (C), the hydrosilane compound (D), and the compound (B) are as described above. The mixing of the allyl group-containing compound (C), the hydrosilane compound (D), the ruthenium compound (A'), and the compound (B) is not limited to a particular order, and they can be mixed in any order. Hereinafter, the "ruthenium compound (A')" and the "reaction conditions" will be described in detail.

<Ruthenium Compound (A')>

The ruthenium compound (A') used in one embodiment of the present invention is not subject to any particular limitation, except that it does not have the compound (B) as a ligand. The ruthenium compound (A') may be ruthenium(III) chloride hydrate or a ruthenium complex having, as a ligand, a compound (B') that is not classified as a compound (B). Examples of the compound (B') include 2,5-norbornadiene, 1,5-cyclooctadiene, *p*-cymene, mesitylene, benzene, carbonyl, isocyanide, and arene ligands.

In order to reduce the formation of by-products, the ruthenium compound (A') is preferably a ruthenium complex having a ligand selected from 2,5-norbornadiene, benzene, and p-cymene ligands.

<Reaction Conditions>

The conditions for the reaction step, such as the preferred amount of the hydrosilane compound (D) used (i.e., the initially added amount), the type of the solvent employed, and the preferred reaction temperature, are the same as those described in the embodiment of the "step of carrying out hydrosilylation of the allyl group-containing compound (C) with the hydrosilane compound (D) in the presence of the ruthenium complex (A)". The preferred amount of the ruthenium compound (A') used (i.e., the initially added amount) is the same as the above-described amount of the ruthenium complex (A) used (i.e., the initially added amount). This production method involves generating the ruthenium complex (A) in the reaction system by mixing the ruthenium compound (A') and the compound (B) in the reaction vessel. Thus, for example, it is preferable to introduce the allyl group-containing compound (C) into a reaction vessel, stir the compound (C) at a given temperature, add the ruthenium compound (A') and the compound (B) to the compound (C) under stirring, and then add the hydrosilane compound (D). The interval between the addition of the ruthenium complex (A') and the compound (B) and the addition of the hydrosilane compound (D) is not limited to a particular length of time and may be chosen as appropriate in consideration of factors such as the intended degree of silyl group introduction and the production time.

The amount of the compound (B) to be added is not limited to a particular range. The amount of the compound (B), expressed as a proportion by weight relative to the allyl group-containing compound (C), is typically 0.01 ppm or more, preferably 0.1 ppm or more, and more preferably 1 ppm or more, and is typically 10% or less, preferably 1% or less, and more preferably 0.1% or less.

The above-described method for producing the silyl group-containing compound (E) yields a mixture containing the silyl group-containing compound (E) and the ruthenium complex (A). In particular, when the polymer mixture contains a hydrolyzable silyl group-containing polymer as the silyl group-containing organic polymer ($E_a$) and the ruthenium complex (A), the mixture can be mixed with a curing catalyst to form a curable composition.

The amount of the ruthenium complex (A) in the polymer mixture corresponds to the above-described amount of the ruthenium complex (A) or ruthenium compound (A') used (i.e., the initially added amount). Specifically, the amount of the ruthenium complex (A), expressed as a proportion by weight relative to the hydrolyzable silyl group-containing polymer, is typically 0.01 ppm or more, preferably 0.1 ppm or more, and more preferably 1 ppm or more, and is typically 10% or less, preferably 1% or less, and more preferably 0.1% or less.

<Curable Composition>

When the silyl group-containing organic polymer ($E_a$) is a hydrolyzable silyl group-containing organic polymer, a curable composition containing this polymer can be formed. The curable composition can be cured to obtain a cured product. As stated above, the polymer backbone of the silyl group-containing organic polymer ($E_a$) is more preferably a polyoxyalkylene polymer and even more preferably polyoxypropylene.

A curable composition containing a hydrolyzable silyl group-containing organic polymer obtained by the production method described above exhibits shorter skinning time and better curability than hydrolyzable silyl group-containing organic polymers produced using a conventionally known hydrosilylation catalyst such as a Karstedt catalyst. A cured product obtained by curing the curable composition exhibits high modulus. The strength of the cured product is also high.

(Curing Catalyst)

The curable composition according to the present embodiment preferably contains a curing catalyst to accelerate the hydrolysis-condensation reaction of hydrolyzable silyl groups, i.e., the curing reaction.

The curing catalyst used may be a conventionally known catalyst. Specific examples of curing catalysts that can be used include an organotin compound, a metal carboxylate, an amine compound, a carboxylic acid, an alkoxy metal, an inorganic acid, and a mixture thereof.

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), a reaction product of dibutyltin oxide and a silicate compound, a reaction product of dibutyltin oxide and a phthalic ester, dioctyltin diacetate, dioctyltin dilaurate, dioctyltin bis(ethyl maleate), dioctyltin bis(octyl maleate), dioctyltin bis(acetylacetonate), dioctyltin distearate, dioctyltin oxide, and a reaction product of dioctyltin oxide and a silicate compound. In view of recently heightened environmental awareness, dioctyltin compounds are preferred.

Specific examples of the metal carboxylate include tin carboxylate, bismuth carboxylate, titanium carboxylate, zirconium carboxylate, iron carboxylate, potassium carboxylate, and calcium carboxylate. The metal carboxylate may be a combination of any of the carboxylic acids mentioned below and any of various metals.

Specific examples of the amine compound include: amines such as octylamine, 2-ethylhexylamine, laurylamine, stearylamine, piperidine, 4-methylpiperidine, and hexamethyleneimine; nitrogen-containing heterocyclic compounds such as pyridine, 1,8-diazabicyclo[5,4,0]undec-7-ene (DBU), and 1,5-diazabicyclo[4,3,0]non-5-ene (DBN); guanidines such as guanidine, phenylguanidine, and diphenylguanidine; biguanides such as butyl biguanide, 1-o-tolyl biguanide, and 1-phenyl biguanide; and ketimine compounds.

Specific examples of the carboxylic acid include acetic acid, propionic acid, butyric acid, 2-ethylhexanoic acid, lauric acid, stearic acid, oleic acid, linoleic acid, neodecanoic acid, and versatic acid.

Specific examples of the alkoxy metal include: titanium compounds such as tetrabutyl titanate, titanium tetrakis(acetylacetonate), titanium ethyl acetoacetate, and diisopropoxytitanium bis(ethyl acetoacetate); aluminum compounds such as aluminum tris(acetylacetonate) and diisopropoxyaluminum ethyl acetoacetate; and zirconium compounds such as zirconium tetrakis(acetylacetonate).

Other curing catalysts that can be used include fluorine anion-containing compounds, photoacid generators, and photobase generators.

Two or more different curing catalysts may be used in combination. For example, the combined use of the amine compound and carboxylic acid as mentioned above or of the amine compound and alkoxy metal as mentioned above can provide a reactivity-enhancing effect.

The amount of the curing catalyst is preferably from 0.001 to 20 parts by weight, more preferably from 0.01 to 15 parts by weight, and particularly preferably from 0.01 to 10 parts by weight per 100 parts by weight of the silyl group-containing organic polymer ($E_a$) according to the present embodiment. A certain type of curing catalyst might, after curing of the curable composition, seep to or soil the surface of the cured product. In such a case, the amount of the curing catalyst used may be controlled within the range of 0.01 to 3.0 parts by weight to maintain a good surface condition of the cured product while preserving the curability of the composition.

Other additional components may be added to the curable composition according to the present embodiment. Examples of such components include a silicon compound, an adhesion promoter, a plasticizer, a solvent, a diluent, a silicate, a filler, an anti-sagging agent, an antioxidant, a light stabilizer, an ultraviolet absorber, a property modifier, a tackifying resin, an epoxy group-containing compound, a photocurable material, an oxygen-curable material, a surface modifier, an epoxy resin, another resin, a flame retardant, and a blowing agent. If necessary, various additives may be added to the curable composition according to the present embodiment to adjust the physical properties of the composition or the cured product. Examples of such additives include a curability modifier, a radical inhibitor, a metal deactivator, an antiozonant, a phosphorus-based peroxide decomposer, a lubricant, a pigment, and a fungicide.

(Filler)

Various fillers may be incorporated into the curable composition according to the present embodiment. Examples of fillers include ground calcium carbonate, colloidal calcium carbonate, magnesium carbonate, diatomite, clay, talc, titanium oxide, fumed silica, precipitated silica, crystalline silica, molten silica, silicic anhydride, hydrated silicic acid, carbon black, ferric oxide, aluminum fines, zinc oxide, activated zinc oxide, PVC powder, PMMA powder, and glass fibers or filaments.

The amount of the filler used is preferably from 1 to 300 parts by weight and more preferably from 10 to 250 parts by weight per 100 parts by weight of the silyl group-containing organic polymer ($E_a$) according to the present embodiment.

Organic or inorganic balloons may be added to reduce the weight (or reduce the specific gravity) of the composition. Balloons are hollow spheres for use as a filler. Examples of the material of the balloons include inorganic materials such as glass, Shirasu, and silica and organic materials such as phenol resin, urea resin, polystyrene, and saran.

The amount of the balloons used is preferably from 0.1 to 100 parts by weight and more preferably from 1 to 20 parts by weight per 100 parts by weight of the silyl group-containing organic polymer ($E_a$) according to the present embodiment.

(Adhesion Promoter)

An adhesion promoter can be added to the curable composition according to the present embodiment. The adhesion promoter added can be a silane coupling agent or a reaction product of the silane coupling agent.
Specific examples of the silane coupling agent include: amino group-containing silanes such as γ-aminopropyltrimethoxysilane, γ-aminopropylmethyldimethoxysilane, N-β-aminoethyl-γ-aminopropyltrimethoxysilane, N-β-aminoethyl-γ-aminopropylmethyldimethoxysilane, N-phenyl-γ-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane and β-(3,4-epoxycyclohexyl)ethyltrimethoxysilane. Condensation products of various silane coupling agents can also be used such as a condensation product of an amino group-containing silane and a condensation product of an amino group-containing silane and another alkoxysilane. Reaction products of various silane coupling agents can also be used such as a reaction product of an amino group-containing silane and an epoxy group-containing silane and a reaction product of an amino group-containing silane and a (meth)acrylic group-containing silane. One of the adhesion promoters may be used alone, or two or more thereof may be used as a mixture.
The amount of the silane coupling agent used is preferably from 0.1 to 20 parts by weight and more preferably from 0.5 to 10 parts by weight per 100 parts by weight of the silyl group-containing organic polymer ($E_a$) according to the present embodiment.

(Plasticizer)

A plasticizer can be added to the curable composition according to the present embodiment. Specific examples of the plasticizer include: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate; non-phthalic ester compounds such as 1,2-cyclohexanedicarboxylic acid diisononyl ester; aliphatic polycarboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkylsulfonic phenyl esters; phosphoric ester compounds; trimellitic ester compounds; chlorinated paraffin; hydrocarbon oils such as alkyl diphenyl and partially-hydrogenated terphenyl; process oil; and epoxy plasticizers such as epoxidized soybean oil and benzyl epoxystearate.
A polymeric plasticizer can also be used. Specific examples of the polymeric plasticizer include: vinyl polymers; polyester plasticizers; polyethers such as polyether polyols (e.g., polyethylene glycol and polypropylene glycol that have a number-average molecular weight of 500 or more) and derivatives resulting from conversion of the hydroxy groups of these polyether polyols into ester or ether groups; polystyrenes; polybutadiene; polybutene; polyisobutylene; butadiene-acrylonitrile; and polychloroprene. One plasticizer may be used alone, or two or more plasticizers may be used in combination.
The polymeric plasticizer does not need to have any reactive silyl group but may have a reactive silyl group. When the polymeric plasticizer has a reactive silyl group, it functions as a reactive plasticizer and is prevented from migrating out of the cured product. When the polymeric plasticizer has a reactive silyl group, the number of these groups is preferably 1 or less and more preferably 0.8 or less on average per molecule. In the case of using a plasticizer having a reactive silyl group, particularly an oxyalkylene polymer having a reactive silyl group, the number-average molecular weight of the polymer is preferably lower than that of the silyl group-containing organic polymer ($E_a$).
The amount of the plasticizer used is preferably from 5 to 150 parts by weight, more preferably from 10 to 120 parts by weight, and even more preferably from 20 to 100 parts by weight per 100 parts by weight of the silyl group-containing organic polymer ($E_a$) according to the present embodiment.

(Solvent and Diluent)

A solvent or diluent can be added to the curable composition according to the present embodiment. The solvent or diluent used is not limited to a particular compound and may be an aliphatic hydrocarbon, an aromatic hydrocarbon, an alicyclic hydrocarbon, a halogenated hydrocarbon, an alcohol, an ester, a ketone, or an ether. When a solvent or diluent is used, the boiling point of the solvent or diluent is preferably 150°C or higher, more preferably 200°C or higher, and particularly preferably 250°C or higher to avoid air pollution during indoor use of the composition. One of the solvents or diluents as mentioned above may be used alone, or two or more thereof may be used in combination.

(Anti-Sagging Agent)

The curable composition according to the present embodiment may contain an anti-sagging agent added as necessary to prevent sagging and improve workability. Examples of the anti-sagging agent include, but are not limited to, polyamide waxes, hydrogenated castor oil derivatives, and metallic soaps such as calcium stearate, aluminum stearate, and barium stearate. One of these anti-sagging agents may be used alone, or two or more thereof may be used in combination.

The amount of the anti-sagging agent used is preferably from 0.1 to 20 parts by weight per 100 parts by weight of the silyl group-containing organic polymer ($E_a$) according to the present embodiment.

(Antioxidant)

An antioxidant (anti-aging agent) can be used in the curable composition according to the present embodiment. The use of the antioxidant can enhance the weathering resistance of the cured product. Examples of the antioxidant include hindered phenol antioxidants, monophenol antioxidants, bisphenol antioxidants, and polyphenol antioxidants. Specific examples include: Irganox 245, Irganox 1010, Irganox 1035, Irganox 1076, Irganox 1135, Irganox 1330, and Irganox 1520 (all of which are manufactured by BASF); SONGNOX 1076 (manufactured by SONGWON); and BHT. The following hindered amine light stabilizers can also be used: Tinuvin 622LD, Tinuvin 144, Tinuvin 292, CHIMASSORB 944LD, and CHIMASSORB 119FL (all of which are manufactured by BASF); ADK STAB LA-57, ADK STAB LA-62, ADK STAB LA-67, ADK STAB LA-63, and ADK STAB LA-68 (all of which are manufactured by ADEKA Corporation); Sanol LS-2626, Sanol LS-1114, and Sanol LS-744 (all of which are manufactured by Sankyo Lifetech Co., Ltd.); and Nocrac CD (manufactured by Ouchi Shinko Chemical Industrial Co., Ltd.). Other antioxidants such as SONGNOX 4120, NAUGARD 445, and OKABEST CLX050 can also be used. Specific examples of antioxidants are mentioned also in Japanese Laid-Open Patent Application Publication No. H4-283259 or Japanese Laid-Open Patent Application Publication No. H9-194731.

The amount of the antioxidant used is preferably from 0.1 to 10 parts by weight and more preferably from 0.2 to 5 parts by weight per 100 parts by weight of the silyl group-containing organic polymer ($E_a$) according to the present embodiment.

(Light Stabilizer)

A light stabilizer can be used in the curable composition according to the present embodiment. The use of the light stabilizer can prevent photooxidative degradation of the cured product. Examples of the light stabilizer include benzotriazole, hindered amine, and benzoate compounds. Particularly preferred are hindered amine compounds.

The amount of the light stabilizer used is preferably from 0.1 to 10 parts by weight and more preferably from 0.2 to 5 parts by weight per 100 parts by weight of the silyl group-containing organic polymer ($E_a$) according to the present embodiment.

(Ultraviolet Absorber)

An ultraviolet absorber can be used in the curable composition according to the present embodiment. The use of the ultraviolet absorber can enhance the surface weathering resistance of the cured product. Examples of the ultraviolet absorber include benzophenone, benzotriazole, salicylate, substituted acrylonitrile, and metal chelate compounds. Particularly preferred are benzotriazole compounds, examples of which include those sold under the names of Tinuvin P, Tinuvin 213, Tinuvin 234, Tinuvin 326, Tinuvin 327, Tinuvin 328, Tinuvin 329, Tinuvin 571, Tinuvin 1600, and Tinuvin B75 (all of which are manufactured by BASF).

The amount of the ultraviolet absorber used is preferably from 0.1 to 10 parts by weight and more preferably from 0.2 to 5 parts by weight per 100 parts by weight of the silyl group-containing organic polymer ($E_a$) according to the present embodiment.

(Property Modifier)

The curable composition according to the present embodiment may contain a property modifier added as necessary to adjust the tensile properties of the resulting cured product. Examples of the property modifier include, but are not limited to: alkylalkoxysilanes such as phenoxytrimethylsilane, methyltrimethoxysilane, dimethyldimethoxysilane, trimethylmethoxysilane, and n-propyltrimethoxysilane; arylalkoxysilanes such as diphenyldimethoxysilane and phenyltrimethoxysilane; alkylisopropenoxysilanes such as dimethyldiisopropenoxysilane, methyltriisopropenoxysilane, and γ-glycidoxypropylmethyldiisopropenoxysilane; trialkylsilyl borates such as tris(trimethylsilyl) borate and tris(triethylsilyl) borate; silicone varnishes; and polysiloxanes. The use of the property modifier can increase the hardness of the cured product of the curable composition according to the present embodiment or conversely decrease the hardness and increase the elongation at break of the cured product. One of the property modifiers as mentioned above may be used alone, or two or more thereof may be used in combination.

In particular, a compound hydrolyzable to form a compound having a monovalent silanol group in the molecule has the effect of decreasing the modulus of the cured product without aggravating the surface stickiness of the cured product. Particularly preferred is a compound the hydrolysis of which gives trimethylsilanol. Examples of the compound hydrolyzable to form a compound having a monovalent silanol group in the molecule include silicon compounds which are derivatives of alcohols such as hexanol, octanol, phenol, trimethylolpropane, glycerin, pentaerythritol, and sorbitol and the hydrolysis of which gives monosilanols. Specific examples include phenoxytrimethylsilane and tris((trimethylsiloxy) methyl)propane.

The amount of the property modifier used is preferably from 0.1 to 10 parts by weight and more preferably from 0.5 to 5 parts by weight per 100 parts by weight of the silyl group-containing organic polymer ($E_a$) according to the present embodiment.

(Tackifying Resin)

The curable composition according to the present embodiment can contain a tackifying resin added as necessary for the purpose of enhancing the bond strength or adhesion of the curable composition to a substrate or for any other purpose. The tackifying resin is not limited to a particular type and may be a commonly used tackifying resin.

Specific examples of the tackifying resin include terpene resins, aromatic modified terpene resins, hydrogenated terpene resins, terpene-phenol resins, phenol resins, modified phenol resins, xylene-phenol resins, cyclopentadiene-phenol resins, coumarone-indene resins, rosin resins, rosin ester resins, hydrogenated rosin ester resins, xylene resins, low-molecular-weight polystyrene resins, styrene copolymer resins, styrene block copolymers, hydrogenated styrene block copolymers, petroleum resins (such as C5 hydrocarbon resins, C9 hydrocarbon resins, and C5-C9 hydrocarbon copolymer resins), hydrogenated petroleum resins, and DCPD resins. One of these resins may be used alone, or two or more thereof may be used in combination.

The amount of the tackifying resin used is preferably from 2 to 100 parts by weight, more preferably from 5 to 50 parts by weight, and even more preferably from 5 to 30 parts by weight per 100 parts by weight of the silyl group-containing organic polymer ($E_a$) according to the present embodiment.

(Epoxy Group-Containing Compound)

An epoxy group-containing compound can be used in the curable composition according to the present embodiment. The use of the epoxy group-containing compound can enhance the recovery performance of the cured product. Examples of the epoxy group-containing compound include epoxidized unsaturated fats and oils, epoxidized unsaturated fatty acid esters, alicyclic epoxy compounds, epichlorohydrin derivatives, and mixtures of the derivatives. Specific examples include epoxidized soybean oil, epoxidized linseed oil, bis(2-ethylhexyl)-4,5-epoxycyclohexane-1,2-dicarboxylate (E-PS), epoxy octyl stearate, and epoxy butyl stearate. It is recommended to use the epoxy compound in an amount of 0.5 to 50 parts by weight per 100 parts by weight of the silyl group-containing organic polymer ($E_a$) according to the present embodiment.

(Photocurable Material)

A photocurable material can be used in the curable composition according to the present embodiment. The use of the photocurable material can lead to the formation of a coating of the photocurable material on the surface of the cured product, resulting in reduction in the stickiness of the cured product or enhancement of the weathering resistance of the cured product. Many such compounds are known, including organic monomers, oligomers, resins, and compositions containing them. Typical examples of photocurable materials that can be used include: an unsaturated acrylic compound which is a monomer or an oligomer having one or more unsaturated acrylic or methacrylic groups or a mixture of the monomer and oligomer; polyvinyl cinnamates; and azide resins.

The amount of the photocurable material used is preferably from 0.1 to 20 parts by weight and more preferably from 0.5 to 10 parts by weight per 100 parts by weight of the silyl group-containing organic polymer ($E_a$) according to the present embodiment.

(Oxygen-Curable Material)

An oxygen-curable material can be used in the curable composition according to the present embodiment.

Examples of the oxygen-curable material include unsaturated compounds reactive with oxygen in the air. The oxygen-curable material reacts with oxygen in the air to form a cured coating in the vicinity of the surface of the cured product, thus offering benefits such as preventing the surface of the cured product from being sticky and preventing deposition of dirt and dust on the surface of the cured product. Specific examples of the oxygen-curable material include: drying oils exemplified by tung oil and linseed oil; various alkyd resins obtained by modification of the drying oil compounds; drying oil-modified acrylic polymers, epoxy resins, and silicone resins; and liquid polymers such as 1,2-polybutadiene, 1,4-polybutadiene, and C5 to C8 diene polymers which are obtained by polymerization or copolymerization of diene compounds such as butadiene, chloroprene, isoprene, and 1,3-pentadiene. One of these materials may be used alone, or two or more thereof may be used in combination.

The amount of the oxygen-curable material used is preferably from 0.1 to 20 parts by weight and more preferably from 0.5 to 10 parts by weight per 100 parts by weight of the silyl group-containing organic polymer ($E_a$) according to the present embodiment. As taught in Japanese Laid-Open Patent Application Publication No. H3-160053, it is recommended to use the oxygen-curable material in combination with a photocurable material.

(Epoxy Resin)

An epoxy resin can also be used in the curable composition according to the present embodiment. The composition containing an added epoxy resin is preferred for use as an adhesive, in particular an adhesive for exterior wall tiles. Examples of the epoxy resin include bisphenol A epoxy resins and novolac epoxy resins.

The proportions of the epoxy resin and the silyl group-containing organic polymer ($E_a$) according to the present embodiment are not limited to particular ranges. The silyl group-containing organic polymer ($E_a$)/epoxy resin weight ratio is preferably from 100/1 to 1/100.

When an epoxy resin is added to the curable composition according to the present embodiment, a curing agent for curing the epoxy resin may also be used in the curable composition. The epoxy resin-curing agent used is not limited to a particular material and may be a commonly used epoxy resin-curing agent.

When a curing agent for curing the epoxy resin is used, the amount of the curing agent is preferably from 0.1 to 300 parts by weight per 100 parts by weight of the epoxy resin.

<<Preparation of Curable Composition>>

The curable composition according to the present embodiment can be prepared as a one-part composition all the components of which are blended together and hermetically stored and which, when applied to any object, cures under the action of moisture in the air. The curable composition may be prepared as a two-part composition consisting of an organic polymer composition and a curing agent prepared separately from the organic polymer composition by blending components such as a curing catalyst, a filler, a plasticizer, and water. In the case of this two-part composition, the curing agent blend and the organic polymer composition are mixed before use. In terms of workability, it is preferable to prepare the curable composition as a one-part composition.

When the curable composition is a one-part composition, all the components are blended together in advance. Thus, it is preferable that a water-containing component be dried to remove water before use or dehydrated by means such as pressure reduction during blending or kneading. The storage stability of the curable composition can be further improved by not only performing the drying/dehydration but also adding an alkoxysilane compound such as methyltrimethoxysilane, phenyltrimethoxysilane, n-propyltrimethoxysilane, vinyltrimethoxysilane, vinylmethyldimethoxysilane, γ-mercaptopropylmethyldimethoxysilane, γ-mercaptopropylmethyldiethoxysilane, or γ-glycidoxypropyltrimethoxysilane.

<Applications>

The curable composition according to the present embodiment can be used as a pressure-sensitive adhesive, a sealing material for buildings, ships, automobiles, or roads, an adhesive, a waterproofing material, a coating-waterproofing material, a mold making material, a vibration-isolating material, a vibration-damping material, a soundproofing material, a foam material, a paint, or a spray material. A cured product obtained by curing the curable composition according to the present embodiment is superior in flexibility and adhesion. As such, the curable composition is suitable for use as a sealing material or an adhesive.

The curable composition according to the present embodiment can be used in various applications, including: a material for use in an electrical or electronic part, such as a sealant for the back side of a solar cell; an electrical insulating material for an electrical or electronic part or device, such as an insulating sheath material for an electric wire or a cable; an acoustic insulating material; an elastic adhesive; a binder; a contact adhesive; a spray-type sealing material; a crack-repairing material; an adhesive for tile laying; an adhesive for an asphalt-waterproofing material; a powder paint; a cast molding material; a rubber material for medical purposes; a pressure-sensitive adhesive for medical purposes; a pressure-sensitive adhesive sheet for medical purposes; a medical device sealing material; a dental impression material; a food packaging material; a joint sealing material for exterior cladding such as siding board; a coating material; an anti-skid covering material; a buffer material; a primer; an electrically conductive material for electromagnetic wave shielding; a thermally conductive material; a hot-melt material; a potting agent for electrical or electronic purposes; a film; a gasket; a concrete-reinforcing material; an adhesive for temporary bonding; any kind of molding material; a rust-proofing or waterproofing sealant for an edge face (cut edge) of wire glass or laminated glass; and a liquid sealing material for use in industrial parts such as parts of automobiles, large vehicles (e.g., cargo trucks and buses), railroad cars, aircrafts, ships, electric machines, and various other machines. For example, in an automobile, the curable composition can be used for diverse purposes, such as for adhesive mounting of various parts such as a plastic cover, a trim, a flange, a bumper, a window, and interior and exterior parts. Furthermore, the curable composition can, alone or with the help of a primer, adhere closely to a wide variety of substrates such as glass, porcelain, wood, metal, and a resin molded article, and thus can be used as any of various types of sealing compositions and adhesive compositions. In addition, the curable composition according to the present embodiment can be used as an adhesive for interior panels, an adhesive for exterior panels, an adhesive for tile laying, an adhesive for stone laying, an adhesive for ceiling finishing, an adhesive for floor finishing, an adhesive for wall finishing, an adhesive for vehicle panels, an adhesive for assembly of electrical, electronic, or precision equipment, an adhesive for bonding of leather, fiber products, fabric, paper, plates, or rubber, a reactive post-crosslinking pressure-sensitive adhesive, a sealing material for direct glazing, a sealing material for double-glazed glass, a sealing material for SSG, a sealing material for working joints of buildings, or a material for civil engineering or bridge construction. The curable composition can be used also as a pressure-sensitive adhesive material such as a pressure-sensitive adhesive tape or sheet.

In the following items, preferred aspects of the present disclosure are listed. The present invention is not limited to the following items.

[Item 1]

A ruthenium complex (A) having a compound (B) as a ligand, wherein
the compound (B) contains at least one carbon-carbon double bond per molecule, and contains an electron-withdrawing group bonded to at least one of carbon atoms forming the carbon-carbon double bond.

[Item 2]

The ruthenium complex (A) according to item 1, wherein the compound (B) has a benzene ring skeleton as a skeleton containing the carbon-carbon double bond.

[Item 3]

The ruthenium complex (A) according to item 1, wherein the compound (B) has a norbornadiene skeleton as a skeleton containing the carbon-carbon double bond.

[Item 4]

The ruthenium complex (A) according to any one of items 1 to 3, wherein the electron-withdrawing group is at least one group selected from the group consisting of fluoro, bromo, and iodo groups.

[Item 5]

The ruthenium complex (A) according to item 2, wherein the compound (B) is at least one compound selected from the group consisting of 1,4-dibromobenzene, 1-bromo-3,5-difluorobenzene, 1-bromo-2,6-difluorobenzene, 1,4-diiodobenzene, and 1,3,5-tribromobenzene.

[Item 6]

The ruthenium complex (A) according to item 3, wherein the compound (B) is 2,3-dibromonorbornadiene.

[Item 7]

A hydrosilylation catalyst containing the ruthenium complex (A) according to any one of items 1 to 6.

[Item 8]

A method for producing a silyl group-containing compound (E), the method including the step of carrying out hydrosilylation of an allyl group-containing compound (C) with a hydrosilane compound (D) by mixing the allyl group-containing compound (C), the hydrosilane compound (D), and the hydrosilylation catalyst according to item 7.

[Item 9]

The method according to item 8, wherein in the hydrosilylation, a compound (B) is further added.

[Item 10]

A method for producing a silyl group-containing compound (E), the method including the step of carrying out hydrosilylation of an allyl group-containing compound (C) with a hydrosilane compound (D) by mixing the allyl group-containing compound (C), the hydrosilane compound (D), a compound (B), and a ruthenium compound (A') that does not have the compound (B) as a ligand, wherein
the compound (B) contains at least one carbon-carbon double bond per molecule, and contains an electron-withdrawing group bonded to at least one of carbon atoms forming the carbon-carbon double bond.

[Item 11]

The method according to any one of items 8 to 10, wherein the hydrosilane compound (D) is used in an amount of 3 molar equivalents or more per molar equivalent of allyl groups of the allyl group-containing compound (C).

[Item 12]

The method according to any one of items 8 to 11, wherein the silyl group-containing compound (E) is a polymer having a number-average molecular weight of more than 3,000.

[Item 13]

The method according to any one of items 8 to 12, wherein the silyl group-containing compound (E) is a hydrolyzable silyl group-containing polymer.

[Item 14]

The method according to item 13, wherein the silyl group-containing compound (E) is a hydrolyzable silyl group-containing polyoxyalkylene polymer.

[Item 15]

The method according to any one of items 8 to 14, wherein the compound (B) has a benzene ring skeleton as a skeleton containing the carbon-carbon double bond.

[Item 16]

The method according to any one of items 8 to 14, wherein the compound (B) has a norbornadiene skeleton as a skeleton containing the carbon-carbon double bond.

[Item 17]

The method according to any one of items 8 to 16, wherein the electron-withdrawing group is at least one group selected from the group consisting of fluoro, bromo, and iodo groups.

[Item 18]

The method according to item 15, wherein the compound (B) is at least one compound selected from the group consisting of 1,4-dibromobenzene, 1-bromo-3,5-difluorobenzene, 1-bromo-2,6-difluorobenzene, 1,4-diiodobenzene, and 1,3,5-tribromobenzene.

[Item 19]

The method according to item 16, wherein the compound (B) is 2,3-dibromonorbornadiene.

[Item 20]

The method according to any one of items 10 to 19, wherein the ruthenium compound (A') has a ligand selected from 2,5-norbornadiene, benzene, and p-cymene.

[Item 21]

A polymer mixture containing a hydrolyzable silyl group-containing polymer and the ruthenium complex (A) according to any one of items 1 to 6.

[Item 22]

A curable composition containing the polymer mixture according to item 21 and a curing catalyst.

[Item 23]

A cured product obtained by curing the curable composition according to item 22.

**Examples**

Hereinafter, the present invention will be described in more detail using examples. The present invention is not limited to these examples.
The number-average molecular weights mentioned in the examples are GPC molecular weights measured under the following conditions.

Delivery system: HLC-8420 GPC manufactured by Tosoh Corporation
Column: TSKgel SuperH series manufactured by Tosoh Corporation
Solvent: THF (tetrahydrofuran)
Molecular weight: Polystyrene equivalent
Measurement temperature: 40°C

The proportions of silyl, 1-propenyl, and hydrogenated groups were determined by $^1$H nuclear magnetic resonance (NMR) spectroscopy using the following NMR spectrometer.
Spectrometer: AVANCE III HD 500 (digital spectrometer manufactured by

BRUKER)

(Example 1)

An ethanol solution containing 0.15 g of ruthenium(III) chloride hydrate (manufactured by Tokyo Chemical Industry Co., Ltd.) as the ruthenium compound (A') was stirred under nitrogen atmosphere. While the solution was stirred and heated under reflux, 0.064 g of sodium carbonate and 0.20 g of 2,3-dibromonorbornadiene (manufactured by Tokyo Chemical Industry Co., Ltd.) serving as the compound (B) were added. Stirring was continued under these conditions for 1 hour, followed by filtration and drying under reduced pressure. As a result, a ruthenium complex (A-1) serving as the ruthenium complex (A) was obtained.

(Example 2)

An ethanol solution containing 0.15 g of ruthenium(III) chloride hydrate (manufactured by Tokyo Chemical Industry Co., Ltd.) as the ruthenium compound (A') was stirred under nitrogen atmosphere. While the solution was stirred and heated under reflux, 0.064 g of sodium carbonate and 0.36 g of 2,3-dibromonorbornadiene (manufactured by Tokyo Chemical Industry Co., Ltd.) serving as the compound (B) were added. Stirring was continued under these conditions for 1 hour, followed by filtration and drying under reduced pressure. As a result, a ruthenium complex (A-2) serving as the ruthenium complex (A) was obtained.

(Synthesis Example 1)

A 28% methanol solution of sodium methoxide was added to a hydroxy-terminated polyoxypropylene polymer (F-1) having a number-average molecular weight of about 3,100. The amount of sodium methoxide was 1.1 molar equivalents per molar equivalent of the hydroxy groups of the polymer (F-1). After methanol was distilled off under reduced pressure, allyl chloride was added in an amount of 1.3 molar equivalents per molar equivalent of the hydroxy groups of the polymer (F-1), and the reaction was allowed to proceed at 130°C for 1 hour, thereby converting the terminal hydroxy groups into allyl groups. Allyl chloride remaining unreacted was then distilled off under reduced pressure. The resulting unpurified allyl-terminated polyoxyalkylene was mixed and stirred with n-hexane and water, and the mixture was centrifuged to remove water. Hexane was distilled off under reduced pressure from the resulting hexane solution, removing metal salts from the polymer. In this manner, an allyl group-containing organic polymer (C-1) serving as the allyl group-containing compound (C) was obtained. The number-average molecular weight of this polymer was 3,100.

(Example 3)

To the polymer (C-1) serving as the allyl group-containing compound (C) were added 2,400 ppm of the ruthenium complex (A-1) obtained as the ruthenium complex (A) in Example 1 and dimethoxymethylsilane serving as the hydrosilane compound (D) (its amount was 5.0 molar equivalents per molar equivalent of the allyl groups of the polymer (C-1)), and hydrosilylation was carried out at 70°C. $^1$H NMR spectroscopy was performed every hour from the start of the reaction, and the reaction was continued until complete consumption of the allyl groups of the polymer (C-1) was confirmed. Volatile components were then distilled off under reduced pressure, giving a polymer serving as the silyl group-containing compound (E). The obtained polymer was analyzed by $^1$H NMR spectroscopy to determine the proportions of silyl groups, 1-propenyl groups, and hydrogenated groups relative to the total amount of these groups. The results are shown in Table 1.

(Example 4)

Hydrosilylation was carried out in the same manner as in Example 3, except for using 2,400 ppm of the ruthenium complex (A-2) obtained as the ruthenium complex (A) in Example 2. The results are shown in Table 1.

(Examples 5 to 17)

As shown in Table 1, the ruthenium complex (A) or ruthenium compound (A') and the compound (B) were added to the polymer (C-1) serving as the allyl group-containing compound (C). These compounds were stirred at 70°C for 10 minutes. Dimethoxymethylsilane was further added as the hydrosilane compound (D) (its amount was 5.0 molar equivalents per molar equivalent of the allyl groups of the polymer (C-1)), and hydrosilylation of the allyl groups of the polymer (C-1) was carried out at 70°C. $^1$H NMR spectroscopy was performed every hour from the start of the reaction, and the reaction was continued until the allyl groups of the polymer (C-1) were completely consumed. Volatile components were then distilled off under reduced pressure, giving a polymer serving as the silyl group-containing compound (E). The obtained polymer was analyzed by $^1$H NMR spectroscopy to determine the proportions of silyl groups, 1-propenyl groups, and hydrogenated groups relative to the total amount of these groups. The results are shown in Table 1.

[Table 1]

| | Hydrosilylation catalyst | | Amount of catalyst (ppm) | Added ligand | | Amount of added ligand (ppm) | Reaction time (hr) | Percentage conversion (%) | Silyl groups (%) | 1-Propenyl groups (%) | Hydrogenated groups (%) | Mn of starting material (GPC) | Mn of reaction product (GPC) |
|---|---|---|---|---|---|---|---|---|---|---|---|---|---|
| Ex. 3 | (A) | Ruthenium complex (A-1) | 2400 | - | Not used | - | 1 | > 99 | 90 | 1 | 9 | 3100 | 4400 |
| Ex. 4 | (A) | Ruthenium complex (A-2) | 2400 | - | Not used | - | 1 | > 99 | 95 | 4 | 1 | 3100 | 4500 |
| Ex. 5 | (A) | Ruthenium complex (A-1) | 2400 | (B) | 2,3- Dibromonorbornadiene | 6200 | 1 | > 99 | 95 | 0 | 5 | 3100 | 4800 |
| Ex. 6 | (A') | [RuCl$_2$(nbd)]$_n$ | 2400 | (B) | 2,3-Dibromonorbornadiene | 6200 | 1 | > 99 | 99 | 0 | 1 | 3100 | 3500 |
| Ex. 7 | (A') | [RuCl$_2$(benzene)]$_2$ | 2400 | (B) | 2,3-Dibromonorbornadiene | 6200 | 1 | > 99 | 99 | 0 | 1 | 3100 | 4000 |
| Ex. 8 | (A') | [RuCl$_2$(p-cymene)]$_2$ | 2400 | (B) | 2,3-Dibromonorbornadiene | 6200 | 1 | > 99 | 93 | 0 | | 3100 | 4900 |
| Ex. 9 | (A') | Ru$_3$(CO)$_{12}$ | 2400 | (B) | 2,3-Dibromonorbornadiene | 6200 | 1 | > 99 | 92 | 3 | 5 | 3100 | 4300 |
| Ex. 10 | (A') | Ruthenium(III) chloride hydrate | 2400 | (B) | 2,3-Dibromonorbornadiene | 6200 | 1 | > 99 | 90 | 1 | 9 | 3100 | 4000 |
| Ex. 11 | (A') | Ruthenium(III) chloride hydrate | 240 | (B) | 2,3-Dibromonorbornadiene | 620 | 1 | > 99 | 90 | 1 | 9 | 3100 | 3900 |
| Ex. 12 | (A') | Ruthenium(III) chloride hydrate | 48 | (B) | 2,3-D$_1$bromonorbornadiene | 120 | 1 | > 99 | 92 | 4 | 4 | 3100 | 3600 |
| Ex. 13 | (A') | [RuCl$_2$(nbd)]$_n$ | 2400 | (B) | 1,3,5-Tribromobenzene (chloroform solution) | 9400 | 1 | > 99 | 99 | 0 | 1 | 3100 | 3600 |
| Ex. 14 | (A') | [RuCl$_2$(nbd)]$_n$ | 2400 | (B) | 1,4-Dibromobenzene (ethanol solution) | 7100 | 2 | > 99 | 98 | 1 | 1 | 3100 | 5800 |
| Ex. 15 | (A') | [RuCl$_2$(nbd)]$_n$ | 2400 | (B) | 1-Bromo-3,5-difluorobenzene | 5800 | 2 | > 99 | 98 | 1 | 1 | 3100 | 3500 |
| Ex. 16 | (A') | [RuCl$_2$(nbd)]$_n$ | 2400 | (B) | 1-Bromo-2,6-difluorobenzene | 5800 | 2 | > 99 | 98 | 1 | 1 | 3100 | 3800 |
| Ex. 17 | (A') | [RuCl$_2$(nbd)]$_n$ | 2400 | (B) | 1,4-Diiodobenzene (ethanol solution) | 9900 | 1 | > 99 | 99 | 0 | 1 | 3100 | 3800 |

(Comparative Examples 1 to 6)

To the polymer (C-1) serving as the allyl group-containing compound (C) were added, as shown in Table 2, 2,400 ppm of a commercially-available Karstedt catalyst (a platinum-divinyldisiloxane complex, isopropanol solution with a platinum concentration of 3 wt%) or ruthenium compound (A') and dimethoxymethylsilane serving as the hydrosilane compound (D) (its amount was 5.0 molar equivalents per molar equivalent of the allyl groups of the polymer (C-1)). Hydrosilylation of the allyl groups of the polymer (C-1) was carried out at 70°C. $^1$H NMR spectroscopy was performed every hour from the start of the reaction, and the reaction was continued until the allyl groups of the polymer (C-1) were completely consumed. Volatile components were then distilled off under reduced pressure, giving a silyl group-containing polymer. The obtained polymer was analyzed by $^1$H NMR spectroscopy to determine the proportions of silyl groups, 1-propenyl groups, and hydrogenated groups relative to the total amount of these groups. The results are shown in Table 2.

(Comparative Examples 7 to 12)

To the polymer (C-1) serving as the allyl group-containing compound (C) were added, as shown in Table 2, 2,400 ppm of $[RuCl_2(nbd)]_n$ (nbd: norbornadiene) serving as the ruthenium compound (A') and a compound (B') that is not classified as the compound (B). The mixture was stirred at 70°C for 10 minutes. Dimethoxymethylsilane was further added as the hydrosilane compound (D) (its amount was 5.0 molar equivalents per molar equivalent of the allyl groups of the polymer (C-1)), and hydrosilylation of the allyl groups of the polymer (C-1) was carried out at 70°C. $^1$H NMR spectroscopy was performed every hour from the start of the reaction, and the reaction was continued until the allyl groups of the polymer (C-1) were completely consumed. Volatile components were then distilled off under reduced pressure, giving a silyl group-containing polymer. The obtained polymer was analyzed by $^1$H NMR spectroscopy to determine the proportions of silyl groups, 1-propenyl groups, and hydrogenated groups relative to the total amount of these groups. The results are shown in Table 2.

[Table 2]

| | | Catalyst | Amount of catalyst (ppm) | | Added ligand | Amount of added ligand (ppm) | Reaction time (hr) | Percentage conversion (%) | Silyl groups (%) | 1-Propenyl groups (%) | Hydrogenated groups (%) | Mn of starting material (GPC) | Mn of reaction product (GPC) |
|---|---|---|---|---|---|---|---|---|---|---|---|---|---|
| Comp. 1 | - | Karstedt catalyst | 2400 | - | Not used | - | 1 | > 99 | 82 | 17 | 1 | 3100 | - |
| Comp. 2 | (A') | [RuCl$_2$(nbd)]$_n$ | 2400 | - | Not used | - | 2 | > 99 | 84 | 13 | 3 | 3100 | - |
| Comp. 3 | (A') | [RuCl$_2$(benzene)]$_2$ | 2400 | - | Not used | - | 3 | > 99 | 83 | 10 | 7 | 3100 | - |
| Comp. 4 | (A') | [RuCl$_2$(p-cymene)]$_2$ | 2400 | - | Not used | - | 1 | > 99 | 87 | 3 | 10 | 3100 | - |
| Comp. 5 | (A') | Ru$_3$(CO)$_{12}$ | 2400 | - | Not used | - | 2 | 94 | 1 | 91 | 8 | 3100 | - |
| Comp. 6 | (A') | Ruthenium(III) chloride hydrate | 2400 | - | Not used | - | 1 | > 99 | 58 | 26 | 16 | 3100 | - |
| Comp. 7 | (A') | [RuCl$_2$(nbd)]$_n$ | 2400 | (B') | 2,5-Norbornadiene | 2800 | 2 | > 99 | 78 | 19 | 3 | 3100 | - |
| Comp. 8 | (A') | [RuCl$_2$(nbd)]$_n$ | 2400 | (B') | 2-Norbornene (ethanol solution) | 2800 | 1 | > 99 | 82 | 16 | 2 | 3100 | - |
| Comp. 9 | (A') | [RuCl$_2$(nbd)]$_n$ | 2400 | (B') | 5-Norbornene-2,3-dicarboxylic acid (methanol solution) | 5500 | 2 | > 99 | 51 | 40 | 9 | 3100 | - |
| Comp. 10 | (A') | [RuCl$_2$(nbd)]$_n$ | 2400 | (B') | 2,6-Di-tert-butyl-1,4-benzoquinone (methanol solution) | 6600 | 2 | > 99 | 75 | 3 | 22 | 3100 | - |
| Comp. 11 | (A') | [RuCl$_2$(nbd)]$_n$ | 2400 | (B') | Mesitylene | 3600 | 3 | > 99 | 83 | 15 | 2 | 3100 | - |
| Comp. 12 | (A') | [RuCl$_2$(nbd)]$_n$ | 2400 | (B') | Phloroglucinol (ethanol solution) | 3800 | 1 | > 99 | 79 | 15 | 6 | 3100 | - |

Tables 1 and 2 reveal the following findings. A comparison of Examples 3 and 4 with Comparative Examples 1 to 6 shows that in Examples 3 and 4, in which the ruthenium complex (A) having the compound (B) as a ligand was used, the obtained polymers had a higher proportion of silyl groups and lower proportions of 1-propenyl groups and hydrogenated groups than the polymers obtained in Comparative Examples 1 to 6 in which a Karstedt catalyst or ruthenium compound (A') was used. This indicates that in Examples 3 and 4, silyl groups were introduced more selectively toward the allyl groups of the polymer (C-1) than in Comparative Examples 1 to 6. A comparison between Examples 3 and 4 shows that the degree of silyl group introduction was higher in Example 4 in which the ruthenium complex (A-2) was used. This suggests that increasing the amount of the compound (B) used in the synthesis of the ruthenium complex (A) is preferred.

A comparison between Examples 3 and 5, in which the ruthenium complex (A-1) was used, shows that silyl groups were more selectively introduced in Example 5 in which 2,3-dibromonorbornadiene was added as the compound (B) in addition to the ruthenium complex (A-1).

A comparison of Examples 6 to 17, in which the ruthenium compound (A') was used and the compound (B) was added, with Comparative Examples 2 to 6, in which the ruthenium compound (A') was used without the addition of the compound (B), shows that silyl groups were introduced more selectively toward the allyl groups of the polymer (C-1) in Examples 6 to 17 than in Comparative Examples 2 to 6. This confirms that a significant increase in the degree of silyl group introduction can be achieved by a simple method in which the ruthenium complex (A) is not synthesized in advance but instead hydrosilylation is carried out after the compound (B) is added to the ruthenium compound (A').

Furthermore, a comparison of Example 6, in which $[RuCl_2(nbd)]_n$ was used as the ruthenium compound (A') and 2,3-dibromonorbornadiene was added as the compound (B), with Comparative Examples 7 to 12, in which $[RuCl_2(nbd)]_n$ was used as the ruthenium compound (A') and a compound (B') not classified as the compound (B) was added, shows that silyl groups were introduced more selectively toward the allyl groups of the polymer (C-1) in Example 6 than in Comparative Examples 7 to 12. Comparative Examples 7 to 12 showed no increase in the degree of silyl group introduction compared to Comparative Example 2, whereas Example 6 exhibited a significant increase in the degree of silyl group introduction relative to Comparative Example 2. This demonstrates that the addition of the compound (B) having a specific structure plays an important role in increasing the degree of silyl group introduction.

(Synthesis Example 2)

Propylene oxide was polymerized using polyoxypropylene glycol having a number-average molecular weight of about 4,500 as an initiator in the presence of a zinc hexacyanocobaltate-glyme complex catalyst. This polymerization yielded a hydroxy group-containing organic polymer (F-2) terminated at both ends with hydroxy groups and having a number-average molecular weight of 14,500.

To the hydroxy group-containing polyoxyalkylene polymer (F-2) was added a 28% methanol solution of sodium methoxide the amount of which was 1.1 molar equivalents per molar equivalent of the hydroxy groups of the polymer (F-2). After methanol was distilled off under reduced pressure, allyl chloride was added in an amount of 1.3 molar equivalents per molar equivalent of the hydroxy groups of the polymer (F-2), and the reaction was allowed to proceed at 130°C for 1 hour. Allyl chloride was then distilled off under reduced pressure. The resulting unpurified allyl group-containing organic polymer was mixed and stirred with n-hexane and water, and the mixture was centrifuged to remove water. Hexane was distilled off under reduced pressure from the resulting hexane solution, removing metal salts from the polymer. In this manner, an allyl group-containing polyoxyalkylene polymer (C-2) serving as the allyl group-containing compound (C) was obtained. The number-average molecular weight of this polymer was 14,500.

(Example 18)

To the polymer (C-2) serving as the allyl group-containing compound (C) was added 240 ppm of the ruthenium complex (A-2) obtained as the ruthenium complex (A) in Example 2. Dimethoxymethylsilane was further added as the hydrosilane compound (D) (its amount was 5.0 molar equivalents per molar equivalent of the allyl groups of the polymer (C-2)), and hydrosilylation of the allyl groups of the polymer (C-2) was carried out at 90°C. $^1$H NMR spectroscopy was performed every hour from the start of the reaction, and the reaction was continued until the allyl groups of the polymer (C-2) were completely consumed. Volatile components were then distilled off under reduced pressure, giving a polymer serving as the silyl group-containing compound (E). The obtained polymer was analyzed by $^1$H NMR spectroscopy to determine the proportions of silyl groups, 1-propenyl groups, and hydrogenated groups relative to the total amount of these groups. The results are shown in Table 3.

(Example 19)

To the polymer (C-2) serving as the allyl group-containing compound (C) were added 240 ppm of $[RuCl_2(nbd)]_n$ serving as the ruthenium compound (A') and 620 ppm of 2,3-dibromonorbornadiene serving as the compound (B), and the mixture was stirred at 90°C for 10 minutes. Dimethoxymethylsilane was further added as the hydrosilane compound (D) (its amount was 5.0 molar equivalents per molar equivalent of the allyl groups of the polymer (C-2)), and hydrosilylation of the allyl groups of the polymer (C-2) was carried out at 90°C. $^1$H NMR spectroscopy was performed every hour from the start of the reaction, and the reaction was continued until the allyl groups of the polymer (C-2) were completely consumed. Volatile components were then distilled off under reduced pressure, giving a polymer serving as the silyl group-containing compound (E). The obtained polymer was analyzed by $^1$H NMR spectroscopy to determine the proportions of silyl groups, 1-propenyl groups, and hydrogenated groups relative to the total amount of these groups. The results are shown in Table 3.

(Comparative Examples 13 and 14)

To the polymer (C-2) serving as the allyl group-containing compound (C) was added 240 ppm of a Karstedt catalyst or $[RuCl_2(nbd)]_n$ serving as the ruthenium compound (A'). Dimethoxymethylsilane was further added as the hydrosilane compound (D) (its amount was 5.0 molar equivalents per molar equivalent of the allyl groups of the polymer (C-2)), and hydrosilylation of the allyl groups of the polymer (C-2) was carried out at 90°C. $^1$H NMR spectroscopy was performed every hour from the start of the reaction, and the reaction was continued until the allyl groups of the polymer (C-2) were completely consumed. Volatile components were then distilled off under reduced pressure, giving a silyl group-containing polymer. The obtained polymer was analyzed by $^1$H NMR spectroscopy to determine the proportions of silyl groups, 1-propenyl groups, and hydrogenated groups relative to the total amount of these groups. The results are shown in Table 3.

[Table 3]

| | Catalyst | | Amount of catalyst (ppm) | Added ligand | | Amount of added lignd (ppm) | Percentage conversion (%) | Silyl groups (%) | 1-Propenyl groups (%) | Hydrogenated groups (%) | Mn of starting material (GPC) | Mn of reaction product (GPC) |
|---|---|---|---|---|---|---|---|---|---|---|---|---|
| Ex. 18 | Ruthenium complex (A-2) | (A) | 240 | Not used | - | - | > 99 | 98 | 0 | 2 | 14500 | 15700 |
| Ex. 19 | [RuCl$_2$(nbd)]$_n$ | (A') | 240 | 2,3-Dibromonorborna-diene | (B) | 620 | > 99 | 98 | 0 | 2 | 14500 | 15500 |
| Comp. 13 | Karstedt catalyst | - | 240 | Not used | - | - | > 99 | 83 | 16 | 1 | 14500 | - |
| Comp. 14 | [RuCl$_2$(nbd)]$_n$ | (A') | 240 | Not used | - | - | > 99 | 69 | 25 | 6 | 14500 | - |

As is evident from Table 3, in Example 18 in which the ruthenium complex (A) was used and Example 19 in which the ruthenium compound (A') and the compound (B) were used, silyl groups were introduced more selectively toward the allyl groups of the polymer (C-2) than in Comparative Examples 13 and 14 in which a Karstedt catalyst or the ruthenium compound (A') was used. This confirms that a high degree of silyl group introduction into the polymer (C) having a number-average molecular weight of 14,500 can be achieved by performing hydrosilylation using the production method of the present invention.

(Synthesis Example 3)

Propylene oxide was polymerized using polyoxypropylene glycol having a number-average molecular weight of about 4,500 as an initiator in the presence of a zinc hexacyanocobaltate-glyme complex catalyst. This polymerization yielded a hydroxy group-containing organic polymer (F-3) terminated at both ends with hydroxy groups and having a number-average molecular weight of 27,600.

To the hydroxy group-containing polyoxyalkylene polymer (F-3) was added a 28% methanol solution of sodium methoxide the amount of which was 1.1 molar equivalents per molar equivalent of the hydroxy groups of the polymer (F-3). After methanol was distilled off under reduced pressure, allyl chloride was added in an amount of 1.3 molar equivalents per molar equivalent of the hydroxy groups of the polymer (F-3), and the reaction was allowed to proceed at 130°C for 1 hour. Allyl chloride was then distilled off under reduced pressure. The resulting unpurified allyl group-containing organic polymer was mixed and stirred with n-hexane and water, and the mixture was centrifuged to remove water. Hexane was distilled off under reduced pressure from the resulting hexane solution, removing metal salts from the polymer. In this manner, an allyl group-containing organic polymer (C-3) serving as the allyl group-containing compound (C) was obtained. The number-average molecular weight of this polymer was 27,600.

(Example 20)

To the polymer (C-3) serving as the allyl group-containing compound (C) were added 240 ppm of the ruthenium complex (A-2) obtained as the ruthenium complex (A) in Example 2 and dimethoxymethylsilane serving as the hydrosilane compound (D) (its amount was 5.0 molar equivalents per molar equivalent of the allyl groups of the polymer (C-3)), and hydrosilylation of the allyl groups of the polymer (C-3) was carried out at 90°C. $^1$H NMR spectroscopy was performed every hour from the start of the reaction, and the reaction was continued until the allyl groups of the polymer (C-3) were completely consumed. Volatile components were then distilled off under reduced pressure, giving a polymer serving as the silyl group-containing compound (E). The obtained polymer was analyzed by $^1$H NMR spectroscopy to determine the proportions of silyl groups, 1-propenyl groups, and hydrogenated groups relative to the total amount of these groups. The results are shown in Table 4.

(Examples 21 to 25)

As shown in Table 4, the ruthenium compound (A') and the compound (B) were added to the polymer (C-3) serving as the allyl group-containing compound (C). These compounds were stirred at 90°C for 10 minutes. Dimethoxymethylsilane was further added as the hydrosilane compound (D) (its amount was 5.0 molar equivalents per molar equivalent of the allyl groups of the polymer (C-3)), and hydrosilylation of the allyl groups of the polymer (C-3) was carried out at 90°C. $^1$H NMR spectroscopy was performed every hour from the start of the reaction, and the reaction was continued until the allyl groups of the polymer (C-3) were completely consumed. Volatile components were then distilled off under reduced pressure, giving a polymer serving as the silyl group-containing compound (E). The obtained polymer was analyzed by $^1$H NMR spectroscopy to determine the proportions of silyl groups, 1-propenyl groups, and hydrogenated groups relative to the total amount of these groups. The results are shown in Table 4.

(Comparative Examples 15 to 17)

To the polymer (C-3) serving as the allyl group-containing compound (C) were added 240 ppm of a commercially-available Karstedt catalyst or ruthenium compound (A') and dimethoxymethylsilane serving as the hydrosilane compound (D) (its amount was 5.0 molar equivalents per molar equivalent of the allyl groups of the polymer (C-3)). Hydrosilylation of the allyl groups of the polymer (C-3) was carried out at 90°C. $^1$H NMR spectroscopy was performed every hour from the start of the reaction, and the reaction was continued until the allyl groups of the polymer (C-1) were completely consumed. Volatile components were then distilled off under reduced pressure, giving a silyl group-containing polymer. The obtained polymer was analyzed by $^1$H NMR spectroscopy to determine the proportions of silyl groups, 1-propenyl groups, and hydrogenated groups relative to the total amount of these groups. The results are shown in Table 4.

[Table 4]

| | | Catalyst | Amount of catalyst (ppm) | | Added ligand | Amount of added ligand (ppm) | Reaction time (hr) | Percentage conversion (%) | Silyl groups (%) | 1-Propenyl groups (%) | Hydrogenated groups (%) | Mn of starting material (GPC) | Mn of reaction product (GPC) |
|---|---|---|---|---|---|---|---|---|---|---|---|---|---|
| Ex. 20 | (A) | Ruthenium complex (A-2) | 240 | - | Not used | - | 1 | >99 | 99 | 0 | 1 | 27600 | 29500 |
| Ex. 21 | (A') | [RuCl$_2$(nbd)]$_n$ | 240 | (B) | 2,3-Dibromonorbornadiene | 620 | 1 | >99 | 98 | 0 | 2 | 27600 | 29000 |
| Ex. 22 | (A') | [RuCl$_2$(nbd)]$_n$ | 48 | (B) | 2,3-Dibromonorbornadiene | 120 | 2 | >99 | 99 | 0 | 1 | 27600 | 28900 |
| Ex. 23 | (A') | [RuCl$_2$(benzene)]$_2$ | 240 | (B) | 2,3-Dibroi:nonorbornadiene | 620 | 1 | >99 | 98 | 0 | 2 | 27600 | 28900 |
| Ex. 24 | (A') | [RuCl$_2$(nbd)]$_n$ | 240 | (B) | 1,3,5-Tribromobenzene (chloroform solution) | 620 | 2 | >99 | 97 | 0 | 3 | 27600 | 29700 |
| Ex. 25 | (A') | [RuCl$_2$(nbd)]$_n$ | 100 | (B) | Hexabromobenzene (chloroform solution) | 680 | 2 | >99 | 96 | 0 | 4 | 27600 | 29000 |
| Comp. 15 | - | Karstedt catalyst | 50 | - | Not used | - | 3 | >99 | 79 | 20 | 1 | 27600 | - |
| Comp. 16 | (A') | [RuCl$_2$(nbd)]$_n$ | 240 | - | Not used | - | 2 | >99 | 81 | 14 | 5 | 27600 | - |
| Comp. 17 | (A') | [RuCl$_2$(benzene)]$_2$ | 240 | - | Not used | - | 5 | >99 | 82 | 15 | 3 | 27600 | - |

As is evident from Table 4, silyl groups were introduced more selectively toward the allyl group-containing organic polymer in Examples 20 to 25 than in Comparative Examples 15 to 17. This confirms that a high degree of silyl group introduction into the polymer (C) having a number-average molecular weight of 27,600 can also be achieved by performing hydrosilylation using the production method of the present invention.

(Example 26)

To the polymer (C-2) obtained as the allyl group-containing compound (C) in Synthesis Example 2 were added 240 ppm of $[RuCl_2(nbd)]_n$ serving as the ruthenium compound (A') and 620 ppm of 2,3-dibromonorbornadiene serving as the compound (B), and the mixture was stirred at 100°C for 10 minutes. Dimethoxymethylsilane was further added as the hydrosilane compound (D) (its amount was 5.0 molar equivalents per molar equivalent of the allyl groups of the polymer (C-2)), and hydrosilylation of the allyl groups of the polymer (C-2) was carried out at 100°C. $^1$H NMR spectroscopy was performed every hour from the start of the reaction, and the reaction was continued until the allyl groups of the polymer (C-2) were completely consumed. Volatile components were then distilled off under reduced pressure, giving a polymer serving as the silyl group-containing compound (E). The obtained polymer was analyzed by $^1$H NMR spectroscopy to determine the proportions of silyl groups, 1-propenyl groups, and hydrogenated groups relative to the total amount of these groups. The results are shown in Table 5.

(Comparative Example 18)

Under stirring at 100°C, 240 ppm of $[RuCl_2(nbd)]_n$ serving as the ruthenium compound (A') was added to the polymer (C-2) obtained as the allyl group-containing compound (C) in Synthesis Example 2. Triethoxysilane was further added as the hydrosilane compound (D) (its amount was 5.0 molar equivalents per molar equivalent of the allyl groups of the polymer (C-2)), and hydrosilylation of the allyl groups of the polymer (C-2) was carried out at 100°C. The reaction was continued for 5 hours after the start of the reaction, and volatile components were then distilled off under reduced pressure, giving a silyl group-containing polymer. The obtained polymer was analyzed by $^1$H NMR spectroscopy to determine the proportions of silyl groups, 1-propenyl groups, and hydrogenated groups relative to the total amount of these groups. The results are shown in Table 5.

[Table 5]

| | | Catalyst | Amount of catalyst (ppm) | | Added ligand | Amount of added ligand (ppm) | Hydrosilane compound (D) | Reaction time (hr) | Percentage conversion (%) | Silyl groups (%) | 1-Propenyl groups (%) | Hydrogenated groups (%) |
|---|---|---|---|---|---|---|---|---|---|---|---|---|
| Ex. 26 | (A') | [RuCl$_2$(nbd)]$_n$ | 240 | (B) | 2,3-Dibromonorbornadiene | 620 | Triethoxysilane | 3 | > 99 | 95 | 0 | 5 |
| Comp. 18 | (A') | [RuCl$_2$(nbd)]$_n$ | 240 | - | Not used | - | Triethoxysilane | 5 | 89 | 46 | 50 | 4 |

As is evident from Table 5, silyl groups were introduced more selectively toward the allyl groups of the allyl group-containing organic polymer in Example 26 than in Comparative Example 18. This confirms that despite the use of a different type of hydrosilane compound, a high degree of silyl group introduction can be achieved by performing hydrosilylation using the production method of the present invention.

(Example 27)

Under stirring at 60°C, 2 mg of the ruthenium complex (A-2) obtained as the ruthenium complex (A) in Example 2 was added to 1-octene (1.0 g, 8.9 mmol) serving as the allyl group-containing compound (C). Dimethoxymethylsilane (1.4 g, 13.4 mmol) was further added as the hydrosilane compound (D), and hydrosilylation of the allyl groups of 1-octene was carried out at 60°C. By $^1$H NMR spectroscopy, it was confirmed that the allyl groups of 1-octene were completely consumed in 30 minutes and that the silylated derivative was formed in a yield of 99% or more. This demonstrates that the production method of the present invention can be applied without issue even when the allyl group-containing compound (C) is a low-molecular-weight compound rather than a polymer.

(Example 28)

In an atmosphere of 23°C and 50% relative humidity, 100 parts by weight of the hydrolyzable silyl group-containing organic polymer (E-1) obtained as the silyl group-containing compound (E) in Example 19 was mixed with 90 parts by weight of DINP (diisononyl phthalate, manufactured by J-PLUS Co., Ltd), 160 parts by weight of Hakuenka CCR (precipitated calcium carbonate, manufactured by Shiraishi Calcium Kaisha, Ltd.), 54 parts by weight of Whiton SB (ground calcium carbonate, manufactured by Shiraishi Calcium Kaisha), 5 parts by weight of Tipaque R820 (titanium oxide, manufactured by Ishihara Sangyo Kaisha, Ltd.), 2 parts by weight of Disparlon 6500 (fatty acid amide wax, manufactured by Kusumoto Chemicals, Ltd.), 1 part by weight of Tinuvin 326 (2-(3-tert-butyl-2-hydroxy-5-methylphenyl)-5-chlorobenzotriazole, manufactured by BASF), and 1 part by weight of Tinuvin 770 (bis(2,2,6,6-tetramethyl-4-piperidyl) sebacate, manufactured by BASF). To the mixture were added 5 parts by weight of A-171 (vinyltrimethoxysilane, manufactured by Momentive), 3 parts by weight of A-1120 (N-(β-aminoethyl)-γ-aminopropyltrimethoxysilane, manufactured by Momentive), and 2 parts by weight of Neostann U-220H (dibutyltin bis(acetylacetonate), manufactured by Nitto Kasei Co., Ltd). The resulting mixture was thoroughly stirred using a spatula and then uniformly degassed under stirring using a planetary mixer. As a result, a curable composition was obtained.

(Skinning Time)

In an atmosphere of 23°C and 50% relative humidity, an about 5-mm-thick mold was filled with the obtained curable composition using a spatula, and the surface of the curable composition was leveled. The moment at which the surface leveling was completed was defined as the curing start point. The time taken for the composition as the evaluation object to become non-sticky to the spatula touching the surface of the composition was measured as the skinning time. The result is shown in Table 6.

(Dumbbell Tensile Properties)

A mold was filled with the obtained curable composition, which was then aged at 23°C and 50% relative humidity for 2 days and then at 50°C for 2 days to prepare a sheet-shaped cured product with a thickness of approximately 3 mm. The sheet-shaped cured product was punched to prepare a No. 3 dumbbell specimen. The specimen was subjected to tensile strength testing in an atmosphere of 23°C and 50% relative humidity to measure its modulus at 50% elongation (M50) and at 100% elongation (M100). The tensile strength at break (TB) and elongation at break (EB) were also measured. The measurement was performed using Autograph (AGS-J) manufactured by Shimadzu Corporation at a tensile speed of 200 mm/min. The results are shown in Table 6.

(Example 29)

A curable composition was obtained in the same manner as in Example 28, except that 100 parts by weight of the hydrolyzable silyl group-containing organic polymer (E-2) obtained as the silyl group-containing compound (E) in Example 20 was used instead of 100 parts by weight of the hydrolyzable silyl group-containing organic polymer (E-1). The obtained curable composition was used to evaluate skinning time and dumbbell tensile properties in the same manner as in Example 28. The results are shown in Table 6.

(Comparative Example 19)

A curable composition was obtained in the same manner as in Example 28, except that 100 parts by weight of the hydrolyzable silyl group-containing organic polymer (E'-1) obtained in Comparative Example 13 was used instead of 100 parts by weight of the hydrolyzable silyl group-containing organic polymer (E-1). The obtained curable composition was used to evaluate skinning time and dumbbell tensile properties in the same manner as in Example 28. The results are shown in Table 6.

(Comparative Example 20)

A curable composition was obtained in the same manner as in Example 28, except that 100 parts by weight of the hydrolyzable silyl group-containing organic polymer (E'-2) obtained in Comparative Example 15 was used instead of 100 parts by weight of the hydrolyzable silyl group-containing organic polymer (E-1). The obtained curable composition was used to evaluate skinning time and dumbbell tensile properties in the same manner as in Example 28. The results are shown in Table 6.

[Table 6]

| | | Ex. 28 | Ex. 29 | Comp. 19 | Comp. 20 |
|---|---|---|---|---|---|
| Hydrolyzable silyl group-containing organic polymer | | E-1 | E-2 | E'-1 | E'-2 |
| Allyl group-containing organic polvmer (C) as starting material | | C-2 | C-3 | C-2 | C-3 |
| Mn of polymer (C) | | 14500 | 27600 | 14500 | 27600 |
| Hydrosilylation catalyst | | (A') | (A) | - | - |
| | | $[RuCl_2(nbd)]_n$ | Ruthenium complex (A-2) | Karstedt catalyst | Karstedt catalyst |
| Ligand added in hydrosilylation | | 2,3- Dibromonorbornadicnc | Not used | Not used | Not used |
| Silyl groups | (%) | 98 | 99 | 83 | 79 |
| Hydrolyzable silyl group-containing organic polymer | E-1 | 100 | | | |
| | E-2 | | 100 | | |
| | E'-1 | | | 100 | |
| | E'-2 | | | | 100 |
| Plasticizer | DINP | 90 | 90 | 90 | 90 |
| Filler | Hakuenka CCR | 160 | 160 | 160 | 160 |
| | Whiton SB | 54 | 54 | 54 | 54 |
| Titanium oxide | Tipaque R820 | 5 | 5 | 5 | 5 |
| Thixotropic agent | Disparlon 6500 | 2 | 2 | 2 | 2 |
| Ultraviolet absorber | Tinuvin 326 | 1 | 1 | 1 | 1 |
| Light stabilizer | Tinuvin 770 | 1 | 1 | 1 | 1 |
| Dehydrating agent | A-171 | 5 | 5 | 5 | 5 |
| Adhesion promoter | A-1120 | 3 | 3 | 3 | 3 |

(continued)

|  |  | Ex. 28 | Ex. 29 | Comp. 19 | Comp. 20 |
|---|---|---|---|---|---|
| Curing catalyst | U-220H | 2 | 2 | 2 | 2 |
| Skinning time (min) | | 38 | 41 | 52 | 62 |
| Dumbbell tensile properties | M50 (MPa) | 0.68 | 0.37 | 0.40 | 0.21 |
| | M100 (MPa) | 1.05 | 0.60 | 0.67 | 0.35 |
| | TB (MPa) | 1.71 | 2.23 | 1.54 | 1.73 |
| | EB (%) | 324 | 846 | 466 | 950 |

Table 6 reveals that the hydrolyzable silyl group-containing organic polymer (E-1) obtained by the production method of the present invention exhibited shorter skinning time and better curability than the hydrolyzable silyl group-containing organic polymer (E'-1) produced from the same allyl group-containing organic polymer (C-2) using a Karstedt catalyst. The modulus and strength were also higher; specifically, M100 increased by a factor of about 1.6, and the strength increased by a factor of about 1.1. In addition, the hydrolyzable silyl group-containing organic polymer (E-2) obtained by the production method of the present invention exhibited shorter skinning time and better curability than the hydrolyzable silyl group-containing organic polymer (E'-2) produced from the same allyl group-containing organic polymer (C-3) using a Karstedt catalyst. The modulus and strength were also higher; specifically, M100 increased by a factor of about 1.7, and the strength increased by a factor of about 1.3.

(Synthesis Example 4)

To the hydroxy group-containing organic polymer (F-3) obtained in Synthesis Example 3 was added a 28% methanol solution of sodium methoxide the amount of which was 0.9 molar equivalents per molar equivalent of the hydroxy groups of the polymer (F-3). After methanol was distilled off under reduced pressure, 3-chloro-2-methyl-1-propene (methallyl chloride) was added in an amount of 1.2 molar equivalents per molar equivalents of the hydroxy groups of the polymer (F-3), and the reaction was allowed to proceed at 130°C for 1 hour to convert the terminal hydroxy groups into methallyl groups. Subsequently, 3-chloro-2-methyl-1-propene (methallyl chloride) was distilled off under reduced pressure. The distillation was followed by the addition of a 28% methanol solution of sodium methoxide the amount of which was 0.6 molar equivalents per molar equivalent of the hydroxy groups of the polymer (F-3). After methanol was distilled off under reduced pressure, 3-chloro-2-methyl-1-propene (methallyl chloride) was added in an amount of 0.7 molar equivalents per molar equivalent of the hydroxy groups of the polymer (F-3), and the reaction was allowed to proceed at 130°C for 1 hour to convert the remaining terminal hydroxy groups into methallyl groups. Subsequently, 3-chloro-2-methyl-1-propene (methallyl chloride) was distilled off under reduced pressure. The resulting unpurified methallyl group-containing organic polymer was mixed and stirred with n-hexane and water, and the mixture was centrifuged to remove water. Hexane was distilled off under reduced pressure from the resulting hexane solution, removing metal salts from the polymer. In this manner, a methallyl group-containing organic polymer (G-1) serving as a methallyl group-containing compound (G) was obtained.

To the methallyl group-containing organic polymer (G-1) were added 100 ppm of a Karstedt catalyst and 1000 ppm of 2,5-di-*t*-butyl-1,4-benzoquinone. Dimethoxymethylsilane was further added as the hydrosilane compound (D) (its amount was 1.5 molar equivalents per molar equivalent of the methallyl groups of the polymer (G-1)), and hydrosilylation of the methallyl groups of the polymer (G-1) was carried out at 100°C. $^1$H NMR spectroscopy was performed every hour from the start of the reaction, and the reaction was continued until the methallyl groups of the polymer (G-1) were completely consumed. Volatile components were then distilled off under reduced pressure, giving a silyl group-containing polymer (E'-3).

(Example 30)

A one-part curable composition was prepared using a 5-L planetary mixer (manufactured by Dalton Co., Ltd.) in accordance with the formulation shown in Table 7. First, 160 parts by weight of Ultra-Pflex (colloidal calcium carbonate, manufactured by Specialty Minerals), 54 parts by weight of Q3T (non-surface-treated ground calcium carbonate, manufactured by Huber), and 20 parts by weight of Ti-Pure R-902+ (titanium oxide, manufactured by Chemours) were dried under reduced pressure at 120°C for 2 hours. Next, 100 parts by weight of the hydrolyzable silyl group-containing organic polymer (E-3) obtained as the silyl group-containing compound (E) in Example 22, 90 parts by weight of DINP (diisononyl phthalate, manufactured by J-PLUS Co., Ltd.), 2 parts by weight of Crayvallac SL (fatty acid amide wax, manufactured by ARKEMA), 1 part by weight of Tinuvin 328 (ultraviolet absorber, manufactured by BASF), and 1 part by weight of Tinuvin 770 (light stabilizer, manufactured by BASF) were added to the mixer, and the contents of the mixer were kneaded for 10 minutes. The resulting mixture was collected from the mixer and passed once through a three-roll mill to achieve uniform dispersion of the components. The mixture was then returned to the mixer and dehydrated under reduced pressure for 2 hours. After dehydration under reduced pressure, the mixture was cooled to below 50°C. To the cooled mixture were added 3 parts by weight of A-171 (vinyltrimethoxysilane, manufactured by Momentive), 3 parts by weight of A-1120 ($N$-(β-aminoethyl)-γ-aminopropyltrimethoxysilane, manufactured by Momentive), and 2 parts by weight of Neostann U-220H (dibutyltin bis(acetylacetonate), manufactured by Nitto Kasei Co., Ltd.), and the resulting mixture was then kneaded for 3 minutes. Subsequently, the mixture was degassed under reduced pressure for 2 minutes, after which the resulting mixture was immediately placed and sealed in a moisture-proof aluminum cartridge. In this manner, a curable composition was obtained.

(Skinning Time)

In an atmosphere of 23°C and 50% relative humidity, an about 5-mm-thick mold was filled with the obtained curable composition using a spatula, and the surface of the curable composition was leveled. The moment at which the surface leveling was completed was defined as the curing start point. The time taken for the composition as the evaluation object to become non-sticky to the spatula touching the surface of the composition was measured as the skinning time. The result is shown in Table 7.

(Dumbbell Tensile Properties)

A mold was filled with the obtained curable composition, which was then aged at 23°C and 50% relative humidity for 3 days and then at 50°C for 4 days to prepare a sheet-shaped cured product with a thickness of approximately 3 mm. The sheet-shaped cured product was punched to prepare a No. 3 dumbbell specimen. The specimen was subjected to tensile strength testing in an atmosphere of 23°C and 50% relative humidity to measure its modulus at 50% elongation (M50) and at 100% elongation (M100). The tensile strength at break (TB) and elongation at break (EB) were also measured. The measurement was performed using Autograph (AGS-J) manufactured by Shimadzu Corporation at a tensile speed of 200 mm/min. The results are shown in Table 7.

(Tear Strength)

A 3-mm-thick sheet-shaped mold was filled with the obtained curable composition at 23°C and 50% relative humidity. The composition was cured at 23°C and 50% relative humidity for 3 days, after which it was aged in a 50°C dryer for 4 days, giving a sheet-shaped cured product. The obtained cured product was punched into the shape of a dumbbell specimen for tear testing (shape A as specified in JIS). The specimen was then subjected to tear testing using Autograph (tensile speed of 200 mm/min) at 23°C and 50% relative humidity to measure the tensile strength at break (TB).

(Tensile Shear Strength)

Adherends made of aluminum were used. At 23°C and 50% relative humidity, the curable composition was applied to a 25 mm × 25 mm bonding area of one of the adherends to a thickness of 50 μm. After an open time of 2 minutes, the adherends were attached together. The test specimen thus obtained was allowed to stand at a constant temperature of 23°C and a constant humidity of 50%. At the 1st, 3rd, and 24th hours, the specimen was subjected to tensile shear testing using Autograph (tensile speed of 50 mm/min) to measure the tensile strength at break (TB).

In addition, a test specimen obtained in the same manner was aged at 23°C and 50% relative humidity for 3 days and then at 50°C for 4 days, after which the aged specimen was subjected to tensile shear testing using Autograph to measure the tensile strength at break (TB). The strength achievement rate at each testing time point was calculated using the following equation.

Strength achievement rate (%) = (Tensile strength at testing time point) ÷ (Tensile strength after 3-day aging at 23°C and 50% relative humidity followed by 4-day aging at 50°C) × 100

The results are shown in Table 7.

(Comparative Example 21)

A curable composition was obtained in the same manner as in Example 30, except that 100 parts by weight of the hydrolyzable silyl group-containing organic polymer (E'-2) obtained in Comparative Example 15 was used instead of 100 parts by weight of the hydrolyzable silyl group-containing polyoxyalkylene polymer (E-3). The obtained curable composition was used to evaluate skinning time, dumbbell tensile properties, tear strength, and tensile shear strength in the same manner as in Example 30. The results are shown in Table 7.

(Comparative Example 22)

A curable composition was obtained in the same manner as in Example 30, except that 100 parts by weight of the hydrolyzable silyl group-containing organic polymer (E'-3) obtained in Synthesis Example 4 was used instead of 100 parts by weight of the hydrolyzable silyl group-containing polyoxyalkylene polymer (E-3). The obtained curable composition was used to evaluate skinning time, dumbbell tensile properties, tear strength, and tensile shear strength in the same manner as in Example 30. The results are shown in Table 7.

[Table 7]

| | | Ex. 30 | Comp. 21 | Comp. 22 |
|---|---|---|---|---|
| Hydrolyzable silyl group-containing organic polymer Allyl group-containing organic polymer (C) as starting material | | E-3 | E'-2 | E'-3 |
| | | C-3 | C-3 | - |
| Methallyl group-containing organic polymer (G) as starting material | | - | - | G-1 |
| Mn of polymer (C) or (G) | | 27600 | 27600 | 27600 |
| Hydrosilylation catalyst | | (A') | | |
| | | [RuCl$_2$(nbd)]$_n$ | Karstedt catalyst | Karstedt catalyst |
| Ligand added in hydrosilylation | | 2,3-Dibromonorbornadiene | Not used | Not used |
| Silyl groups | (%) | 99 | 79 | 95 |
| Hydrolyzable silyl group-containing organic polymer | E-3 | 100 | | |
| | E'-2 | | 100 | |
| | E'-3 | | | 1 100 |
| Plasticizer | DINP | 90 | 90 | 90 |
| Filler | Ultra-Pflex | 160 | 160 | 160 |
| | Q3T | 54 | 54 | 54 |
| Titanium oxide | Ti-Pure R902+ | 20 | 20 | 20 |
| Thixotropic agent | Crayyallac SL | 2 | 2 | 2 |
| Ultraviolet absorber | Tinuvin 328 | 1 | 1 | 1 |
| Light stabilizer | Tinuvin 770 | 1 | 1 | 1 |
| Dehydrating agent | A-171 | 3 | 3 | 3 |
| Adhesion promoter | A-1120 | 3 | 3 | 3 |
| Curing catalyst | U-220H | 2 | 2 | 2 |
| Skinning time (min) | | 35 | 52 | 95 |

(continued)

| | | | Ex. 30 | Comp. 21 | Comp. 22 |
|---|---|---|---|---|---|
| Dumbbell tensile properties | | M50 (MPa) | 0.53 | 0.27 | 0.56 |
| | | M100 (MPa) | 0.85 | 0.45 | 0.89 |
| | | TB (MPa) | 2.31 | 1.48 | 2.31 |
| | | EB (%) | 809 | 798 | 779 |
| Tear strength | TB (MPa) | TB (MPa) | 14.2 | 11.7 | 13.2 |
| Tensile shear strength | 23°C, 1 hr | TB (MPa) | 0.97 | 0.36 | 0.05 |
| | | Strength achievement rate | 27% | 16% | 1% |
| | 23°C, 3 hr | TB (MPa) | 1.53 | 1.25 | 1.18 |
| | | Strength achievement rate | 43% | 55% | 35% |
| | 23°C, 24 hr | TB (MPa) | 2.41 | 2.13 | 1.97 |
| | | Strength achievement rate | 68% | 93% | 58% |
| | 23°C, 3d + 50°C, 4d | TB (MPa) | 3.6 | 2.3 | 3.4 |

Table 7 reveals that the hydrolyzable silyl group-containing organic polymer (E-3) obtained by the production method of the present invention exhibited shorter skinning time and better curability than the hydrolyzable silyl group-containing organic polymer (E'-2) produced from the same allyl group-containing organic polymer (C-3) using a Karstedt catalyst and the hydrolyzable silyl group-containing organic polymer (E'-3) produced from the methallyl group-containing organic polymer (G-1) using a Karstedt catalyst. The hydrolyzable silyl group-containing organic polymer (E-3) also exhibited superior tear strength and tensile shear strength compared to the polymers (E'-2) and (E'-3). In the dumbbell tensile testing, the hydrolyzable silyl group-containing organic polymer (E-3) exhibited higher modulus and strength than the hydrolyzable silyl group-containing organic polymer (E'-2), and the modulus and strength of the polymer (E-3) were comparable to those of the hydrolyzable silyl group-containing organic polymer (E'-3).

(Examples 31 to 34)

To the polymer (C-3) serving as the allyl group-containing compound (C) were added, as shown in Table 8, 100 ppm of $[RuCl_2(nbd)]_n$ serving as the ruthenium compound (A') and 260 ppm of 2,3-dibromonorbomadiene serving as the compound (B), and the mixture was stirred at the reaction temperature shown in Table 8 for 10 minutes. Dimethoxymethylsilane was further added as the hydrosilane compound (D) (its amount was shown as molar equivalents per molar equivalent of the allyl groups of the polymer (C-3) in Table 8), and hydrosilylation of the allyl groups of the polymer (C-3) was carried out. $^1$H NMR spectroscopy was performed every hour from the start of the reaction, and the reaction was continued until the allyl groups of the polymer (C-3) were completely consumed. Volatile components were then distilled off under reduced pressure, giving a polymer serving as the silyl group-containing compound (E). The obtained polymer was analyzed by $^1$H NMR spectroscopy to determine the proportions of silyl groups, 1-propenyl groups, and hydrogenated groups relative to the total amount of these groups. The viscosity of the polymer was measured using a viscometer, RE 85U (manufactured by Toki Sangyo Co., Ltd), at 23°C. The results are shown in Table 8.

[Table 8]

| | | Catalyst | Amount of catalyst (ppm) | | Added ligand | Amount of added ligand (ppm) | Amount of hydrosilane compound (molar equivalents relative to allyl groups) | Reaction temperature (°C) | Reaction time (hr) | Percentage conversion (%) | Silyl groups (%) | 1-Propenyl groups (%) | Hydrogenated groups (%) | Viscosity of starting material (Pa•s) | Viscosity of reaction product (Pa•s) |
|---|---|---|---|---|---|---|---|---|---|---|---|---|---|---|---|
| Ex. 31 | (A') | [RuCl$_2$(nbd)]$_n$ | 100 | (B) | 2,3-Dibromonorbornadiene | 260 | 5 | 90 | 2 | > 99 | 99 | 0 | 1 | 43 | 53 |
| Ex. 32 | (A') | [RuCl$_2$(nbd)]$_n$ | 100 | (B) | 2,3-Dibromonorbornadiene | 260 | 3 | 110 | 2 | > 99 | 95 | 2 | 3 | 43 | 65 |
| Ex. 33 | (A') | [RuCl$_2$(nbd)]$_n$ | 100 | (B) | 2,3-Dibroinonorbomadiene | 260 | 2 | 110 | 2 | > 99 | 96 | 1 | 3 | 43 | 71 |
| Ex. 34 | (A') | [RuCl$_2$(nbd)]$_n$ | 100 | (B) | 2,3-Dibromonorbomadiene | 260 | 1.5 | 110 | 3 | > 99 | 95 | 3 | 2 | 43 | 77 |

As is evident from Table 8, silyl groups were introduced with high selectivity in all of Examples 31 to 34. In particular, it is seen that the greater the molar equivalents of the hydrosilane compound (D) per molar equivalent of the allyl groups of the polymer (C-3), the higher the degree of silyl group introduction and the lower the viscosity of the hydrolyzable silyl group-containing organic polymer.

The polymer obtained in Example 31, in which 5 molar equivalents of the hydrosilane compound (D) was reacted with the allyl groups of the polymer (C-3), exhibited the highest degree of silylation and the lowest viscosity among the polymers listed in Table 8.

In Example 32, in which 3 molar equivalents of the hydrosilane compound (D) was reacted with the allyl groups of the polymer (C-3), the degree of silylation was lower and the post-silylation viscosity was higher than in Example 31. However, the polymer obtained in Example 32 exhibited lower viscosity than that obtained in Example 33 in which 2 molar equivalents of the hydrosilane compound (D) was reacted with the allyl groups of the polymer (C-3).

**Claims**

1. A ruthenium complex (A) comprising a compound (B) as a ligand, wherein
the compound (B) comprises at least one carbon-carbon double bond per molecule, and comprises an electron-withdrawing group bonded to at least one of carbon atoms forming the carbon-carbon double bond.

2. The ruthenium complex (A) according to claim 1, wherein the compound (B) comprises a benzene ring skeleton as a skeleton comprising the carbon-carbon double bond.

3. The ruthenium complex (A) according to claim 1, wherein the compound (B) comprises a norbornadiene skeleton as a skeleton comprising the carbon-carbon double bond.

4. The ruthenium complex (A) according to any one of claims 1 to 3, wherein the electron-withdrawing group is at least one group selected from the group consisting of fluoro, bromo, and iodo groups.

5. The ruthenium complex (A) according to claim 2, wherein the compound (B) is at least one compound selected from the group consisting of 1,4-dibromobenzene, 1-bromo-3,5-difluorobenzene, 1-bromo-2,6-difluorobenzene, 1,4-diiodobenzene, and 1,3,5-tribromobenzene.

6. The ruthenium complex (A) according to claim 3, wherein the compound (B) is 2,3-dibromonorbornadiene.

7. A hydrosilylation catalyst comprising the ruthenium complex (A) according to claim 1.

8. A method for producing a silyl group-containing compound (E), the method comprising the step of carrying out hydrosilylation of an allyl group-containing compound (C) with a hydrosilane compound (D) by mixing the allyl group-containing compound (C), the hydrosilane compound (D), and the hydrosilylation catalyst according to claim 7.

9. The method according to claim 8, wherein in the hydrosilylation, a compound (B) is further added.

10. A method for producing a silyl group-containing compound (E), the method comprising the step of carrying out hydrosilylation of an allyl group-containing compound (C) with a hydrosilane compound (D) by mixing the allyl group-containing compound (C), the hydrosilane compound (D), a compound (B), and a ruthenium compound (A') that does not have the compound (B) as a ligand, wherein
the compound (B) comprises at least one carbon-carbon double bond per molecule, and comprises an electron-withdrawing group bonded to at least one of carbon atoms forming the carbon-carbon double bond.

11. The method according to any one of claims 8 to 10, wherein the hydrosilane compound (D) is used in an amount of 3 molar equivalents or more per molar equivalent of allyl groups of the allyl group-containing compound (C).

12. The method according to any one of claims 8 to 10, wherein the silyl group-containing compound (E) is a polymer having a number-average molecular weight of more than 3,000.

13. The method according to any one of claims 8 to 10, wherein the silyl group-containing compound (E) is a hydrolyzable silyl group-containing polymer.

14. The method according to claim 13, wherein the silyl group-containing compound (E) is a hydrolyzable silyl group-containing polyoxyalkylene polymer.

15. The method according to any one of claims 8 to 10, wherein the compound (B) comprises a benzene ring skeleton as a skeleton comprising the carbon-carbon double bond.

16. The method according to any one of claims 8 to 10, wherein the compound (B) comprises a norbornadiene skeleton as a skeleton comprising the carbon-carbon double bond.

17. The method according to any one of claims 8 to 10, wherein the electron-withdrawing group is at least one group selected from the group consisting of fluoro, bromo, and iodo groups.

18. The method according to claim 15, wherein the compound (B) is at least one compound selected from the group consisting of 1,4-dibromobenzene, 1-bromo-3,5-difluorobenzene, 1-bromo-2,6-difluorobenzene, 1,4-diiodobenzene, and 1,3,5-tribromobenzene.

19. The method according to claim 16, wherein the compound (B) is 2,3-dibromonorbornadiene.

20. The method according to claim 10, wherein the ruthenium compound (A') comprises a ligand selected from 2,5-norbornadiene, benzene, and p-cymene.

21. A polymer mixture comprising a hydrolyzable silyl group-containing polymer and the ruthenium complex (A) according to any one of claims 1 to 3.

22. A curable composition comprising the polymer mixture according to claim 21 and a curing catalyst.

23. A cured product obtained by curing the curable composition according to claim 22.

# EP 4 703 367 A1

## INTERNATIONAL SEARCH REPORT

International application No.

**PCT/JP2024/015650**

| A. | CLASSIFICATION OF SUBJECT MATTER |
|---|---|

*C07F 15/00*(2006.01)i; *B01J 31/22*(2006.01)i; *C08G 65/336*(2006.01)i; *C08L 71/00*(2006.01)i; *C08L 101/10*(2006.01)i
FI:  C07F15/00 A CSP; B01J31/22 Z; C08G65/336; C08L71/00 Z; C08L101/10

According to International Patent Classification (IPC) or to both national classification and IPC

| B. | FIELDS SEARCHED |
|---|---|

Minimum documentation searched (classification system followed by classification symbols)

C07F15/00; B01J31/22; C08G65/336; C08L71/00; C08L101/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2014-37390 A (TANAKA KIKINZOKU KOGYO KK) 27 February 2014 (2014-02-27) claims, paragraph [0009] | 1-2 |
| A | | 3-23 |
| X | JP 2015-93937 A (KABUSHIKI KAISHA TOYOTA CHUO KENKYUSHO) 18 May 2015 (2015-05-18) claims, example 1 | 1-2 |
| A | | 3-23 |
| X | JP 2002-503640 A (CALIFORNIA INSTITUTE OF TECHNOLOGY) 05 February 2002 (2002-02-05) claims, paragraph [0044] | 1-2 |
| A | | 3-23 |
| X | JP 2016-501834 A (UMICORE AG & CO. KG) 21 January 2016 (2016-01-21) claims, paragraphs [0045]-[0046] | 1-2 |
| A | | 3-23 |

| ✓ Further documents are listed in the continuation of Box C. | ✓ See patent family annex. |
|---|---|

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 June 2024** | **09 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 703 367 A1**

**INTERNATIONAL SEARCH REPORT**

| International application No. |
|---|
| **PCT/JP2024/015650** |

## C. DOCUMENTS CONSIDERED TO BE RELEVANT

| Category* | Citation of document, with indication, where appropriate, of the relevant passages | Relevant to claim No. |
|---|---|---|
| X | JP 2008-546846 A (ZHAN, Zheng-Yun) 25 December 2008 (2008-12-25) claims, examples | 1-2, 4 |
| A | | 3, 5-23 |
| X | CN 114478648 A (MIDDLE AND SOUTH UNIVERSITIES) 13 May 2022 (2022-05-13) claims, paragraph [0010] | 1-2 |
| A | | 3-23 |
| X | US 2019/0243241 A1 (ECHEM SOLUTIONS CORP.) 08 August 2019 (2019-08-08) paragraph [0026] | 1-2 |
| A | | 3-23 |
| X | Inorganic Chemistry, 2018, 57(21), pages 13749-13760, DOI: 10.1021/acs.inorgchem.8b02286 scheme 1 | 1-2 |
| A | | 3-23 |
| X | Journal of the American Chemical Society, 2018, 140(37), pages 11836-11847, DOI: 10.1021/jacs.8b08150 schemes 1-2 | 1-2 |
| A | | 3-23 |
| X | Macromolecules, 2021, 54(13), pages 6135-6143, DOI: 10.1021/acs.macromol.1c00571 G3 of fig. 3 | 1-2, 4 |
| A | | 3, 5-23 |
| X | Organometallics, 2000, 19(7), pages 1308-1318, DOI: 10.1021/om9909035 scheme 2 | 1-2, 4 |
| A | | 3, 5-23 |
| X | JP 2002-088090 A (NATIONAL INSTITUTE OF ADVANCED INDUSTRIAL & TECHNOLOGY) 27 March 2002 (2002-03-27) claims, example 1 | 1-2, 7-8, 11-13, 15, 21 |
| A | | 3-6, 9-10, 14, 16-20, 22-23 |
| A | CN 112126067 A (NINGBO SHUXIANG NEW MATERIAL CO., LTD.) 25 December 2020 (2020-12-25) entire text | 1-23 |
| A | Journal of the American Chemical Society, 2020, 142(31), pages 13459-13468, DOI: 10.1021/jacs.0c04863 entire text | 1-23 |

Form PCT/ISA/210 (second sheet) (July 2022)

**INTERNATIONAL SEARCH REPORT**
Information on patent family members

International application No.

**PCT/JP2024/015650**

| Patent document cited in search report | | | Publication date (day/month/year) | Patent family member(s) | | | Publication date (day/month/year) |
|---|---|---|---|---|---|---|---|
| JP | 2014-37390 | A | 27 February 2014 | US claims, paragraph [0018] EP TW KR TW | 2015/0225437 2886679 201425630 10-2015-0038596 201522695 | A1 A1 A A A | |
| JP | 2015-93937 | A | 18 May 2015 | (Family: none) | | | |
| JP | 2002-503640 | A | 05 February 2002 | US claims, scheme 1 WO EP | 5977393 1999/026949 1042333 | A A1 A1 | |
| JP | 2016-501834 | A | 21 January 2016 | US claims, paragraphs [0053]-[0054] WO EP CN | 2015/0266009 2014/067767 2725030 104768961 | A1 A1 A1 A | |
| JP | 2008-546846 | A | 25 December 2008 | US claims, examples WO EP EP CN CN KR | 2007/0043180 2007/003135 1905777 2886549 1907992 102643175 10-2008-0037009 | A1 A1 A1 A1 A A A | |
| CN | 114478648 | A | 13 May 2022 | US claims, paragraph [0013] JP WO EP KR | 2024/0101586 2024-504897 2023/116540 4261216 10-2023-0119704 | A1 A A1 A1 A | |
| US | 2019/0243241 | A1 | 08 August 2019 | TW CN | 201934610 110133963 | A A | |
| JP | 2002-088090 | A | 27 March 2002 | (Family: none) | | | |
| CN | 112126067 | A | 25 December 2020 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021011456 A
- JP 61215623 A
- JP S4627250 B
- JP S5915336 B
- US 3278457 A
- US 3278458 A
- US 3278459 A
- US 3427256 A

- US 3427334 A
- US 3427335 A
- JP H10273512 A
- JP H11060722 A
- JP H4283259 A
- JP H9194731 A
- JP H3160053 A